Europäisches Patentamt

(19) European Patent Office

Office européen des brevets

(11) EP 0 592 646 B1

## (12) FASCICULE DE BREVET EUROPEEN

(45) Date de publication et mention
de la délivrance du brevet:
**03.02.1999 Bulletin 1999/05**

(21) Numéro de dépôt: **93910080.6**

(22) Date de dépôt: **28.04.1993**

(51) Int. Cl.$^6$: **B01D 15/02**, B01D 15/08

(86) Numéro de dépôt international:
**PCT/FR93/00419**

(87) Numéro de publication internationale:
**WO 93/22022 (11.11.1993 Gazette 1993/27)**

(54) **PROCEDE ET DISPOSITIF DE FRACTIONNEMENT D'UN MELANGE EN LIT MOBILE SIMULE EN PRESENCE D'UN GAZ COMPRIME, D'UN FLUIDE SUPERCRITIQUE OU D'UN LIQUIDE SUBCRITIQUE**

VERFAHREN UND VORRICHTUNG ZUR CHROMATOGRAPHISCHEN FRAKTIONIERUNG EINER MISCHUNG MITTELS EINES SIMULIERTEN FLIESSBETTS IN GEGENWART EINES KOMPRIMIERTEN GASES, EINES ÜBERKRITISCHEM FLUIDES ODER EINER UNTERKRITISCHEN FLÜSSIGKEIT

METHOD AND DEVICE FOR CHROMATOGRAPHICALLY FRACTIONATING A MIXTURE IN A SIMULATED MOBILE BED IN THE PRESENCE OF A COMPRESSED GAS, A SUPERCRITICAL FLUID OR A SUBCRITICAL LIQUID

(84) Etats contractants désignés:
**BE CH DE DK ES FR GB IT LI NL SE**

(30) Priorité: **29.04.1992 FR 9205304**
**30.07.1992 FR 9209444**
**21.04.1993 FR 9304703**

(43) Date de publication de la demande:
**20.04.1994 Bulletin 1994/16**

(73) Titulaires:
• **INSTITUT FRANCAIS DU PETROLE**
**92502 Rueil-Malmaison (FR)**
• **SOCIETE SEPAREX**
**F-54250 Champigneulles (FR)**

(72) Inventeurs:
• **NICOUD, Roger-Marc**
**F-54630 Richardmesnil (FR)**
• **PERRUT, Michel**
**F-69100 Villeurbanne (FR)**
• **HOTIER, Gérard**
**F-92500 Rueil-Malmaison (FR)**

(74) Mandataire:
**Andreeff, François et al**
**INSTITUT FRANCAIS DU PETROLE**
**4, avenue de Bois-Préau**
**92506 Rueil-Malmaison Cédex (FR)**

(56) Documents cités:
**EP-A- 0 127 926          EP-A- 0 415 822**
**DE-A- 4 041 414          FR-A- 2 527 934**
**US-A- 3 761 533**

**Description**

La présente invention se rapporte à un dispositif et à un procédé industriel de fractionnement de mélanges de composants, de préférence liquides, mais aussi solides ou gazeux, par chromatographie, l'éluant étant soit à pression supercritique, c'est-à-dire un fluide en état supercritique ou un liquide subcritique, soit étant à l'état gazeux sous forme d'un gaz comprimé.

Il convient de rappeler que la chromatographie est basée sur le principe suivant : dans un contenant généralement cylindrique appelé la colonne contenant un garnissage constitué par un corps solide poreux perméable aux fluides et que l'on appelle phase stationnaire, on fait passer le mélange fluide dont on veut séparer les constituants. Le garnissage est par exemple constitué par un gel ou une agglomération de particules pulvérulentes, le fluide qui le traverse étant constitué soit par le mélange fluide dont il convient de séparer les constituants, soit par un mélange dissous dans un fluide solvant que l'on appelle l'éluant. La vitesse de passage des différents constituants à travers le solide perméable dépend des caractéristiques physico-chimiques des différents constituants de sorte qu'à la sortie de la colonne les constituants sortent successivement et sélectivement. Certains des constituants ont tendance à se fixer fortement dans la masse solide et donc à être plus retardés, d'autres au contraire ont peu tendance à se fixer et sortent rapidement avec l'éluant lui-même.

Il faut rappeler que les corps sont généralement connus sous trois états : solide, liquide et gazeux. On passe de l'un à l'autre en faisant varier la température et/ou la pression. Or il existe un point au-delà duquel on peut passer de l'état liquide à l'état gaz ou vapeur sans passer par une ébullition ou à l'inverse par une condensation, mais de façon continue : ce point est appelé le point critique.

On sait qu'un fluide en état supercritique, c'est-à-dire dans un état caractérisé soit par une pression et une température respectivement supérieures à la pression et à la température critiques dans le cas d'un corps pur, soit par un point représentatif (pression, température) situé au-delà de l'enveloppe des points critiques représentés sur un diagramme (pression, température) dans le cas d'un mélange, présente, pour de très nombreuses substances, un pouvoir solvant élevé sans commune mesure avec celui observé dans ce même fluide à l'état de gaz comprimé : il en est de même des liquides dits subcritiques c'est-à-dire dans un état caractérisé soit par une pression supérieure à la pression critique et par une température inférieure à la température critique dans le cas d'un corps pur, soit par une pression supérieure aux pressions critiques et une température inférieure aux températures critiques des composants dans le cas d'un mélange (cf. EP-A-0 127 926).

Les variations importantes et modulables du pouvoir solvant de ces fluides sont d'ailleurs utilisées dans de nombreux procédés d'extraction (solide/fluide), fractionnement (liquide/fluide), de chromatographie analytique ou préparative, de traitement des matériaux (céramiques, polymères...) ; des réactions chimiques ou biochimiques sont également réalisées dans de tels solvants.

L'un des avantages principaux des procédés mettant en oeuvre les fluides à pression supercritique réside dans la facilité de réaliser la séparation entre le solvant (le fluide) et les extraits et solutés, ainsi qu'il a été décrit dans de nombreuses publications et, pour certains aspects importants de mise en oeuvre, dans le brevet FR-A-2584618.

Les propriétés intéressantes de ces fluides sont d'ailleurs utilisées depuis longtemps en chromatographie d'élution, soit à des fins analytiques, soit à des fins de production industrielle selon un procédé décrit dans le brevet FR-A-2527934. L'utilisation de ces fluides a également été décrite comme solvant de désorption de composés retenus sur des absorbants, comme dans plusieurs brevets américains (US-A-4 061 551, US-A-4 124 528, US-A-4 147 624).

Les nombreuses études de la chromatographie d'élution utilisant les fluides supercritiques ou liquides subcritiques ont montré un comportement surprenant de ces fluides marqué, en particulier, par la forte dépendance du facteur de capacité (donc du temps de rétention) à la masse volumique et à la température du fluide éluant, propriété qui va être largement exploitée dans le dispositif et le procédé décrits dans la présente invention. De plus, alors que pour les gaz parfaits, c'est-à-dire principalement pour les gaz sous faible pression à des températures nettement plus élevées que leur température d'ébullition à la pression considérée, le facteur de capacité est indépendant de la pression à température constante, cette forte variation du facteur de capacité en fonction de la masse volumique, et donc de la pression si la température est maintenue constante, est non seulement observée pour les fluides à une pression supérieure à la pression critique mais également pour les gaz comprimés c'est-à-dire portés à une pression inférieure à la pression critique mais toutefois supérieure à la pression où ils ont le comportement de gaz parfaits : cette propriété sera exploitée dans le dispositif et le procédé décrits dans la présente invention qui met en oeuvre non pas seulement un éluant à pression supercritique mais également un éluant gazeux porté à une pression suffisante pour qu'apparaisse ce comportement particulier en chromatographie qui a été décrit par de nombreux auteurs dans le cas particulier de la chromatographie analytique d'élution dont par exemple G.M. Schneider, Angew-Chem. Int. Ed. Engl. 17, (1978), p. 716-727 : C.R. Yonker et R.D. Smith, J. of Chromatography 351 (1986), p. 211-218 et 396 (1986), p. 19-29 : M. Perrut and J. Dellacherie, Proc of the 1st symp on supertical fluids Nice 1988; proceedings 2-905-267-13-5, pages 439 à 445.

L'objet de la présente invention est de permettre, à des fins de production industrielle, le fractionnement de mélanges en différentes fractions en utilisant un système chromatographique complexe dérivé dans sa conception

EP 0 592 646 B1

générale des procédés classiquement appelés chromatographie à lit mobile simulé utilisés à grande échelle depuis plusieurs décennies et décrits dans plusieurs brevets américains parmi lesquels on citera US-A-2985889, US-A-3696107, US-A-3706812, US-A-3761533, US-A-4402832, ainsi que certains brevets français les FR-A-2 103 302, FR-A-2 651 148 et FR-A-2 651 149.

L'invention réside dans le fait que, à la différence desdits procédés mis en oeuvre avec des éluants liquides, pour lesquels les phénomènes de rétention sont indépendants de la pression mise en oeuvre, l'éluant est un fluide supercritique, un liquide subcritique ou un gaz comprimé dont les propriétés physico-chimiques, comme en premier lieu celle décrite ci-dessus relative à la variation du facteur de capacité, permettent une mise en oeuvre très différente de celle classiquement utilisée avec les éluants liquides, voire avec des éluants gazeux de comportement très proche d'un gaz partait, conduisant à des résultats surprenants, extrêmement différents de ceux obtenus avec des éluants liquides ainsi qu'il va être décrit ci-dessous. Ainsi, lorsqu'on travaille avec des éluants liquides, leur pouvoir éluant est très difficile à moduler sauf à changer leur composition, comme c'est le cas par exemple dans les régimes à gradient de composition utilisés classiquement en chromatographie en phase liquide - ce qui pose d'ailleurs de difficiles problèmes de recyclage de ces solvants et conduit à des prix de revient très élevés lorsque l'on met en oeuvre de tels procédés à l'échelle de la production industrielle - ou si l'on fait varier leur température, ce qui est difficile également, compte tenu de l'exigence d'une parfaite homogénéité de la température dans toute section d'une colonne chromatographique - ce qui rend cette possibilité quasi irréalisable à l'échelle industrielle.

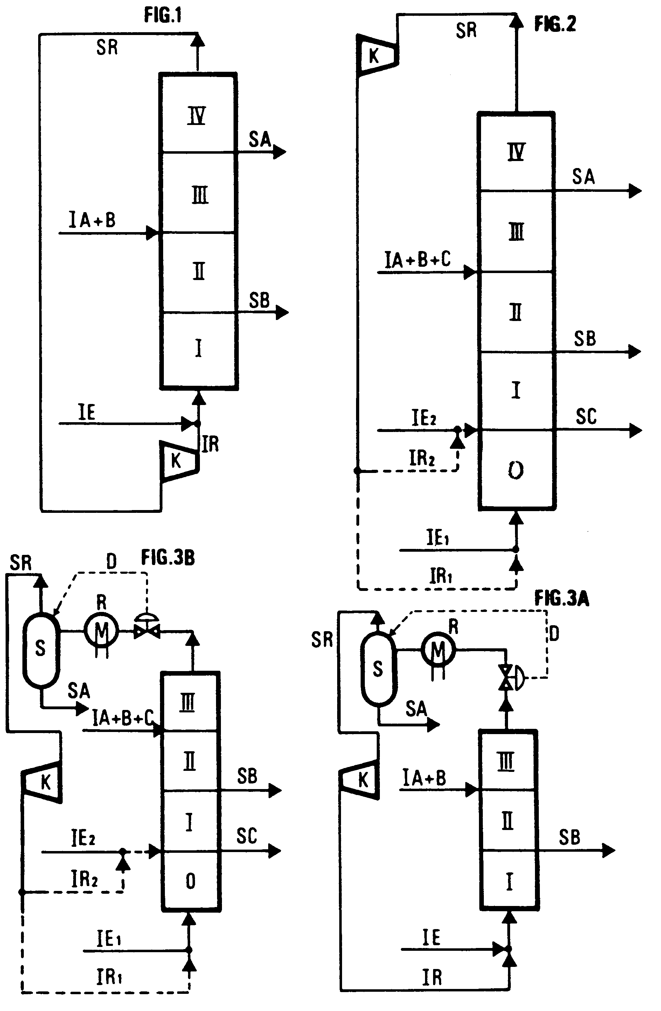

La figure 1 permet de comprendre le fonctionnement des procédés classiques dit de chromatographie à contre-courant simulé. Les procédés comprennent un certain nombre n (allant de 4 à 24 classiquement) de colonnes ou tronçon de colonne chromatographiques $(C_k)$ constituées de cylindres remplis d'un garnissage d'un milieu poreux appelé phase stationnaire, lesquelles n colonnes $(C_k)$, maintenues à une même température, sont connectées les unes aux autres en série et sont percolées par un éluant liquide E mis en circulation dans le sens de la flèche par une pompe P (ou compresseur K) à débit soigneusement choisi et arbitrairement disposée entre deux colonnes ou tronçons : les introductions du mélange à séparer IA + B et d'un appoint d'éluant IE ainsi que les soutirages d'un mélange appelé raffinat SA et d'un mélange appelé extrait SB sont réalisés entre certaines des colonnes $(C_k)$ et $(C_{k+1})$, l'ensemble de ces colonnes apparaissant séparé par exemple en quatre zones : il a été démontré et utilisé à une très grande échelle, dans plusieurs dizaines d'unités industrielles, que si les débits de circulation de l'éluant délivré par la pompe P ou le compresseur K et les débits d'introduction et soutirage susnommés sont bien choisis, et, si l'on déplace, à espace de temps régulier $\Delta t$, les quatre points d'introduction/soutirage délimitant lesdites quatre zones de l'intervalle entre les colonnes $(C_k)$ et $(C_{k+1})$ à l'intervalle entre les colonnes $(C_{k+1})$ et $(C_{k+2})$, on peut obtenir un fractionnement du mélange à séparer en deux fractions nommées raffinat et extrait avec une sélectivité élevée si la phase stationnaire et le solvant d'élution ont été judicieusement choisis. Les avantages de cette mise en oeuvre sont considérables par rapport aux procédés chromatographiques classiques en régime frontal ou en régime d'élution :

- il s'agit, pour l'opérateur, d'un système continu et non d'un système périodique exigeant une gestion difficile :

  - la dilution des composants du raffinat et de l'extrait dans le solvant d'élution est beaucoup plus faible : dans certains cas favorables, les composants se retrouvent à la même concentration que dans le mélange de départ, voire même plus concentrés, alors que, dans le cas des procédés classiques en régime d'élution ou en régime frontal, la dilution est couramment de 100 à 1000 d'où résultent des coûts très élevés de manipulation de l'éluant et de la séparation éluant/produits :

  - le nombre de plateaux théoriques (au sens des chromatographistes) requis pour un fonctionnement donné est nettement inférieur à celui des procédés classiques susnommés, diminuant ainsi très fortement à la fois le prix de la phase stationnaire nécessaire et des équipements qui fonctionnent classiquement à basse ou moyenne pression ($\leq$ 30 bar; 1 bar = $10^{-1}$ MPa).

C'est pourquoi ce type de procédé a pu se révéler extrêmement économique pour traiter de très gros tonnages de produits à faible coût, comme lors de la purification du paraxylène ou le fractionnement glucose/fructose.

On remarquera que la position de la pompe de circulation P de l'éluant reste fixée entre deux colonnes : comme les liquides ne sont pas compressibles, leur pouvoir éluant est indépendant de la pression et reste donc constant dans toutes les zones, quelle que soit la position de la pompe dans chacune de ces zones au cours du temps. On notera également que les nombres de colonnes dans les différentes zones sont en général différents les uns des autres.

Dans des versions plus complexes de ce concept de base, il a été proposé de réaliser non pas deux mais trois (ou plus) fractions soutirées en certains points situés entre deux des colonnes $(C_k)$ et $(C_{k+1})$, ces points, comme ceux d'introduction de l'appoint d'éluant et du mélange à séparer, étant déplacés à espace de temps régulier ainsi qu'il a été décrit ci-dessus.

3

EP-A-0 415 822 enseigne un procédé et un dispositif pour le fractionnement de mélanges par chromatographie à lit mobile simulé. Cependant, le dispositif comprend une seule vanne de régulation pui est mobile (cf. figure 6). C'est une vanne rotative qui permet de réguler la pression entre les zones 6 et 5 (correspondant aux zones 0 et I de le figure 2 de la présente demande), tout le long de la boucle.

La présente invention a pour objet un dispositif de fractionnement d'un mélange de p composants en p composants ou q coupes, q étant inférieur ou égal à p, dispositif présentant les caractéristiques telle que définies dans la revendication 1.

La présente invention a également pour objet un procédé de fractionnement chromatographique de mélanges de composants dans une boucle de colonnes ou tronçons de colonnes montés en série, ledit procédé comportant les caractéristiques de la revendication 7.

Les critères de choix de l'éluant gazeux peuvent répondre à des impératifs différents voire contradictoires. On peut citer :

- l'écart de volatilité entre les produits de la charge et l'éluant,
- l'aptitude de l'éluant à déplacer les constituants de la charge (dans le cas où l'éluant est adsorbé),
- la compatibilité de l'éluant et de l'adsorbant : par exemple on évitera d'envoyer de la vapeur d'eau sur les zéolithes dans certaines conditions de température et de pression... ou d'envoyer de l'oxygène sur du charbon actif.

Alors que pour les gaz parfaits, c'est-à-dire principalement les gaz sous faible pression à des températures nettement plus élevées que leur température d'ébullition à la pression considérée, ou encore présentant des valeurs de coefficient de compressibilité (défini par PV/RT), par exemple comprises entre environ 0,95 et 1,05 et de préférence entre 0,98 et 1,02, le facteur de capacité est indépendant de la pression à température constante, une forte variation du facteur de capacité en fonction de la masse volumique, (et donc de la pression si la température est maintenue constante), est non seulement observée pour les fluides à une pression supérieure à la pression critique mais également pour les gaz comprimés c'est-à-dire portés à une pression inférieure à la pression critique mais toutefois supérieure à la pression où ils ont le comportement de gaz parfaits. La pression sera telle que le coefficient de compressibilité soit sensiblement différent de 1.

Selon une mise en oeuvre particulière du procédé, l'éluant peut être injecté dans la boucle à une température différente de la température opératoire. Il peut dans certaines conditions se refroidir ou se réchauffer au contact de l'adsorbant par exemple.

De préférence, la pression décroît dans chaque zone. Par exemple, dans le cas d'un dispositif adapté à la séparation de trois composants avec quatre zones 0, I, II, III ou cinq zones 0, I, II, III et IV, la pression peut décroître d'au moins un intervalle entre deux points de soutirage autres que le point de soutirage de l'extrait SC existant entre les zones 0 et I et de préférence au moins un organe de réduction de pression ou de détente supplémentaire peut être rajouté entre la zone 0 et la zone I au dispositif ci-dessus, de sorte que la pression décroît entre chaque zone.

Selon une variante avantageuse du procédé, on peut ajuster la pression dans la zone III en amont de laquelle a été injecté le mélange AB ou ABC, à une valeur inférieure d'au moins 1 bar et de préférence de 3 à 100 bar à la pression régnant dans la zone II.

Selon une variante ayant l'avantage d'éviter la zone la plus en aval (zone IV), on peut détendre et séparer par des moyens appropriés (une vanne de détente, suivie éventuellement d'une réfrigération ou d'un réchauffage ou encore une colonne à distiller par exemple) la totalité de l'éluant et du raffinat en aval d'une zone en amont de laquelle a été injecté le mélange à séparer : on recueille le raffinat et on recycle le courant de recyclage de l'éluant à la pression d'injection dans la zone 0 grâce au compresseur ou à la pompe.

Dans le cas où l'on veut séparer un mélange de deux composants dans le dispositif selon l'invention, on peut, selon une première variante du procédé, détendre et séparer par des moyens appropriés (une vanne de détente par exemple suivie éventuellement d'une réfrigération ou d'un réchauffage ou encore une colonne à distiller) la totalité de l'éluant et du raffinat en aval d'une zone III en amont de laquelle a été injecté le mélange AB. On recueille alors le raffinat et on recycle le courant de recyclage de l'éluant à la pression d'injection dans la zone I grâce au compresseur ou à la pompe. Cette variante présente l'avantage d'éviter la quatrième et dernière zone.

Selon une deuxième variante du procédé relative à la séparation d'un mélange de deux composants, on peut introduire une partie de l'extrait sensiblement débarrassé de l'éluant en aval d'une zone Z entre la zone I et la zone II, définie en amont par le point de soutirage de l'extrait (SB) et en aval par un point de réinjection (IRB) de la partie de l'extrait B sensiblement débarrassé de l'éluant.

Selon une troisième variante du procédé relative à la séparation d'un mélange de deux composants, on peut introduire une partie du raffinat sensiblement débarrassé de l'éluant en amont d'une zone Z située en aval de la zone III, définie en amont par un point de réinjection (IRA) de la dite partie du raffinat sensiblement débarrassé de l'éluant et en aval par le point de soutirage du raffinat (SA).

Bien entendu, selon ces deux variantes, la pression d'injection (IRB ou IRA) sera telle que la pression dans la zone en aval du point d'injection sera au plus égale à la pression dans la zone immédiatement en amont.

Selon une dernière variante, le pression décroît entre chaque zone à partir de le zone recevant l'éluant.

Dans ce qui suit et par simplification on se limitera au cas où p et q sont égaux à 2 c'est-à-dire correspondant à un mélange de deux composants à séparer en deux coupes, ce qui donne un circuit à n points d'injection d'éluant, n points d'injection de mélange, (soit au plus 2n points d'injection en tout), n points de soutirage d'extrait, n points de soutirage de raffinat (soit au plus 2 n points de soutirage en tout ) ; avantageusement ces 4 n points d'injection et soutirage seront confondus en n points. Ceci donne un circuit comprenant successivement et en série un courant d'injection d'éluant, un courant de soutirage d'extrait, un courant d'injection de mélange à fractionner et un courant de soutirage de raffinat, chacun de ces courants étant alternativement connectés aux n points d'injection-soutirage situés entre deux colonnes successives.

Entre deux points successifs d'injection ou de soutirage on peut prévoir une ou plusieurs colonnes ou tronçons de colonnes en série. Dans ce qui suit, également on considérera, pour faciliter la compréhension, des colonnes successives et espacées les unes des autres montées en série et de mêmes caractéristiques dimensionnelles. Il est évident qu'il est possible de considérer chaque zone comme étant définie non pas par une colonne individuelle mais par un ou des tronçon(s) inclus dans une colonne plus longue, ce qui, à la limite, pourrait se traduire par une seule colonne avec un circuit de circulation de l'éluant entre les deux extrémités de la colonne, par exemple. En fait, utiliser un certain nombre de colonnes, même divisées en tronçons, facilite en pratique la mise en place et le tassement du garnissage ainsi que son extraction en fin d'opération en vue d'un renouvellement.

Pour fixer les idées et le vocabulaire, on commencera, en se reportant à la figure 1 , par schématiser le principe de fonctionnement du dispositif et du procédé correspondant à un lit mobile à contre-courant simulé en considérant une colonne chromatographique verticale divisée en tronçons, plus précisément ici en quatre tronçons superposés correspondant successivement à la zone I, la zone II, la zone III et la zone IV en partant du bas de la colonne. L'éluant est introduit, par un compresseur K, à la partie inférieure de la colonne en IE et le mélange de composants A et B entre les zones II et III en IA+B. Les composants A et B sont soutirés sous forme d'extrait contenant essentiellement le composant B en SB entre la zone I et la zone II et sous forme de raffinat contenant essentiellement le composant A en SA entre la zone III et la zone IV. Sur cette figure 1, l'éluant circule donc de bas en haut. Comme on le verra par la suite, on va introduire un décalage relatif des points d'injection et de soutirage (par rapport à la phase solide) ce qui simulera un décalage de la phase solide vers le bas. On remarquera, à ce sujet, qu'en pratique, il vaut mieux ne pas déplacer la phase solide de garnissage vers l'amont par rapport aux points d'injection et de soutirage, mais de maintenir le garnissage solide fixe et de déplacer relativement les points d'injection et de soutirage en les décalant périodiquement d'une zone, dans le même sens que la circulation de l'éluant c'est-à-dire vers l'aval. Si on revient à la figure 1, les fluides circulant de bas en haut, le mélange A + B est injecté entre la zone II et la zone III, c'est-à-dire à mi-hauteur et les composants vont se répartir chromatographiquement par interactions entre composants et phase stationnaire, par exemple par adsorption, dans le garnissage solide. Les composants à plus forte affinité avec la phase solide seront donc plus difficilement entraînés par l'éluant et ne le suivront qu'avec retard, tandis que les composants à affinité plus faible auront tendance à être plus facilement entraînés par l'éluant et donc à sortir prioritairement. Si l'on veut que le composant à plus faible affinité, ici A, sorte de la colonne entre la zone III et la zone IV et si l'on veut que le composant à plus forte affinité, ici B, sorte de la colonne entre la zone I et la zone II, il est préférable d'opérer dans les conditions suivantes :

- Dans la zone I, il faut favoriser une forte élution c'est-à-dire débit d'éluant et/ou un fort pouvoir solvant pour empêcher B de sortir par le bas lors du décalage vers le bas du garnissage, ce qui permet à ce composant B à plus forte affinité d'être soutiré entre la zone I et la zone II.

- Dans la zone II, il convient que le composant A à plus faible affinité remonte en suivant l'éluant pour ne pas sortir vers le bas avec B mais par contre, il faut que B reste fixé par le solide pour descendre ensuite de la zone II à la zone I et de la zone I vers la sortie avec le décalage successif des zones de garnissage chromatographique. Ceci nécessite une élution faible et donc un débit d'éluant et/ou un pouvoir solvant plus faible dans la zone II que dans la zone i.

- Dans la zone III, il faut que le composant A à plus faible affinité, soit entraîné par l'éluant pour être soutiré en A entre la zone III et la zone IV, alors que le composant B doit rester fixé dans le solide et descendre de la zone III vers la zone II lors du décalage. Ceci veut dire qu'une élution faible et donc un débit d'éluant et/ou le pouvoir solvant ne doivent pas être supérieur dans la zone III à ce qu'ils sont que dans la zone II, c'est-à-dire qu'ils peuvent être égaux ou inférieurs.

Dans la zone IV, il faut que le composant A ne soit pas entraîné avec l'éluant en recyclage de sorte que l'élution donc le débit d'éluant et/ou le pouvoir solvant soit plus faible que dans cette zone III.

On peut donc considérer en schématisant, que de chaque zone à la suivante, il est favorable que le pouvoir éluant ou solvant soit diminué, sinon reste égal et ne soit pas augmenté sauf bien entendu lorsque l'on se place à la sortie de la zone IV pour être recyclé en zone I, en ce qui concerne l'éluant et, dans le sens inverse en ce qui concerne le solide. Dans le cas qui vient d'être décrit, on s'est limité au cas de deux constituants mais comme on l'a souligné plus haut ce cas peut être étendu à plus de deux constituants en augmentant le nombre des points de soutirage vers l'aval ou l'amont par rapport au point d'injection du mélange A + B.

Pour mieux faire comprendre les caractéristiques techniques et les avantages de la présente invention, on va en décrire des exemples de réalisation, étant bien entendu que ceux-ci ne seront pas limités quant à leur mode de mise en oeuvre et aux applications que l'on peut en faire. On se reportera à la figure 1 qui vient d'être décrite ainsi qu'aux figures suivantes :

- les figures, 3a, 4a et 4b sont des variantes de schémas d'ensemble envisagées pour la séparation du mélange de 2 constituants,
- les figures 2, 3b montrent des variantes du dispositif pour la séparation d'un mélange à 3 composants,
- la figure 5 illustre une partie d'un dispositif conforme à la réalisation de l'invention.

Une partie courante du dispositif objet de la présente invention est schématisée sur la figure 5. Ce dispositif comprend un certain nombre (favorablement de 3 à 24) de colonnes chromatographiques constituées de tronçons ou de cylindres remplis d'un garnissage d'un milieu poreux appelé phase stationnaire, lesquelles colonnes ($C_k$) dont les parois sont isolées thermiquement, sont connectées les unes aux autres en série et sont percolées par un éluant (gaz comprimé, fluide supercritique ou liquide subcritique) mis en circulation par un compresseur K ou une pompe avec un débit massique maintenu soigneusement constant ; les introductions du mélange à fractionner et d'un appoint d'éluant ainsi que les soutirages d'un mélange appelé raffinat et d'un mélange appelé extrait sont réalisés entre certaines des colonnes ($C_k$ et $C_{k+1}$) comme on l'a vu à la figure 1, l'ensemble de ces colonnes apparaissant séparé par exemple en quatre zones.

Selon l'invention, le procédé va être mis en oeuvre de telle façon que le pouvoir éluant du fluide d'élution va être maintenu sensiblement constant dans chacune de ces zones, mais va être différent d'une zone à l'autre, à la différence fondamentale de ce qui est réalisé dans les procédés décrits ci-dessus utilisant un éluant liquide.

Ceci va être rendu possible par les propriétés particulières des fluides supercritiques ou liquides subcritiques ou gaz comprimés susmentionnées, à condition de concevoir un équipement adapté pour mettre en oeuvre une telle variation. Comme évoqué ci-dessus, il est très difficile d'obtenir, sur des installations de grande échelle, une modulation de la température de lits granulaires et il n'est donc facilement possible de moduler le pouvoir d'élution qu'en faisant varier la pression de l'éluant, ce qui est relativement aisé dans certaines gammes de pression/température. Un des cas particuliers de mise en oeuvre de l'invention consiste à maintenir sensiblement la même pression et sensiblement le même pouvoir d'élution dans toutes les colonnes aux pertes de charge près.

En fait, pour des considérations technologiques liées à l'exigence de minimiser les volumes morts dans toute installation de fractionnement chromatographique (sauf peut-être à la jonction de la première et de la dernière zone), il n'est pas favorable de réaliser une telle modulation du pouvoir éluant par une variation de pression à température constante (régime isotherme), mais bien plutôt de réaliser ladite modulation par une variation de pression à enthalpie constante (régime adiabatique ou isenthalpique) ; ceci conduira à choisir les paramètres de fonctionnement de l'installation dans une zone du diagramme pression-température du fluide éluant au sein de laquelle les variations de température resteront très faibles (quelques degrés Kelvin) lors des opérations de modulation de la pression entre les zones, ce qui n'est pas une limitation importante à la mise en oeuvre du procédé objet de la présente invention. On peut toutefois insérer sans inconvénient un échangeur de chaleur entre la dernière et la première zone du procédé.

Des considérations théoriques et les confirmations expérimentales (lesdites confirmations étant présentées ci-dessous à titre d'exemples non limitatifs de mise en oeuvre du procédé faisant l'objet de l'invention) conduisent à penser que les pouvoirs d'élution dans chacune des quatre zones définies sur la figure 1 sont préférentiellement décroissants, ce qui implique que les pressions régnant dans chacune de ces zones sont préférentiellement décroissantes, sans qu'il soit exclu qu'elles puissent être sensiblement égales dans deux ou trois zones successives, voire les quatre zones. Ceci implique que le compresseur K ainsi que les organes de dépression assurant la chute de pression entre chaque paire de zones doivent rester fixes par rapport aux zones. La mise en oeuvre du fractionnement requiert de préférence le déplacement cadencé, à intervalle de temps fixe $\Delta t$, des points d'introduction de l'apport d'éluant et du mélange à séparer d'une part, des points de prélèvement du raffinat et de l'extrait d'autre part, lesdits points délimitant les quatre zones sus-définies pour passer des intervalles entre les tronçons ou colonnes ($C_k$) et ($C_{k+1}$) aux intervalles entre les tronçons ou colonnes ($C_{k+1}$) et ($C_{k+2}$), lesquelles quatre zones vont donc se déplacer à la cadence $\Delta t$ dans le sens de l'écoulement de l'éluant (contre-courant simulé) ou dans le sens inverse (co-courant simulé).

Pour réaliser un équipement permettant la mise en oeuvre dudit procédé, on peut favorablement utiliser le système représenté sur la figure 5. Dans ce cas, il faut :

- faire varier la position du compresseur ou de la pompe (K) afin que la pression maximale soit toujours en tête de la zone I ; ceci peut être pratiqué par un système de connexions avec vannes tout-ou-rien automatiques disposées entre chaque colonne comme représenté sur la figure 5 ;

- faire varier la position des points où la pression est abaissée par création d'une perte de charge contrôlée en fin des zones I, II et III grâce au pilotage de vannes de régulation situées entre chacune des colonnes, comme représenté sur la figure 5.

Ainsi chaque colonne $C_k$ est connectée à la suivante $C_{k+1}$ via une vanne tout ou rien $V_k$ puis une vanne de régulation de pression $U_k$. L'éluant en sortie de la colonne $C_k$ et celui en provenance du point de soutirage de recyclage SR éventuellement additionné d'éluant frais IE est recomprimé dans le compresseur K ou la pompe via les vannes tout ou rien $V'_k$ et $V''_k$ connectées respectivement à la ligne de soutirage SR et à la ligne d'injection de solvant de recyclage IR, les vannes $V_k$ et $U_k$ étant alors fermées.

On peut donc ainsi faire se déplacer le point de début de la zone I où l'on doit disposer de la pression la plus élevée et donc situer le compresseur en fermant $V_k$ et en ouvrant $V'_k$ et $V''_k$, toutes les autres vannes V sauf $V_k$ étant ouvertes et toutes les vannes V' et V'' sauf $V'_k$ et $V''_k$ étant fermées ; on peut aussi faire se déplacer aux mêmes instants les fins des zones I, II et III où l'on doit défendre l'éluant de $\Delta P1$, $\Delta P2$, $\Delta P3$ respectivement en agissant sur les vannes de détente U correspondantes, les autres vannes U étant pleinement ouvertes.

Par ailleurs, la ligne SB de prélèvement d'extrait est reliée à une vanne de régulation de pression de manière à réguler la pression dans le tronçon de colonne $C_k$, et est connectée en aval de la vanne $U_k$ et en amont de la colonne $C_{k+1}$ via une vanne $W_k$. Cette vanne $W_k$ commandant le prélèvement d'extrait (SB) s'ouvre une fois par cycle. A ce moment-là, les vannes $V_k$ et $U_k$ sont ouvertes, les vannes $W_1$ à $W_{k-1}$ et $W_{k+1}$ à $W_n$ sont fermées, ainsi que les vannes $W'_k$, $W''_k$ et $W'''_k$.

La ligne de prélèvement de raffinat SA est reliée à une vanne de régulation de débit de manière à prélever un débit constant et est connectée en aval de la vanne $U_k$ et en amont de la colonne $C_{k+1}$ va une vanne $W'_k$. Cette vanne $W'_k$ commandant le prélèvement de raffinat SA s'ouvre une fois par cycle. A ce moment-là, les vannes $V_k$ et $U_k$ sont ouvertes alors que les vannes $W'_1$ à $W'_{k-1}$ et $W'_{k+1}$ à $W'_n$ sont fermées ainsi que les vannes $W_k$, $W''_k$ et $W'''_k$.

Les lignes IA+B et IE2 sont connectées chacune à un compresseur ou une pompe distincte, de manière à délivrer des débits constants. La ligne IA+B est connecté en aval de la vanne $U_k$ et en amont de la colonne $C_{k+1}$ via une vanne $W'''_k$. Cette vanne commandant l'injection de mélange s'ouvre une fois par cycle. A ce moment-là les vannes $V_k$ et $U_k$ sont ouvertes, les vannes $W_k$, $W'_k$ et $W''_k$ sont fermées ainsi que les vannes $W'''_1$ à $W'''_{k-1}$ et $W'''_{k+1}$ à $W'''_n$.

Il est à noter que la vanne $W''_k$ commande l'injection de solvant de densité plus faible IE2 en amont de la colonne $C_{k+1}$. Cette -ligne n'est à prendre en compte que lorsque le mélange injecté comporte trois constituants ABC. Dans ce cas, une ligne de prélèvement pour l'extrait SC doit être rajoutée. Les points de prélèvement de l'extrait sont distincts et se placent entre $C_k$ et $V_k$ et ne sont pas représentés sur la figure 5. Les vannes U signalées ouvertes peuvent être soit totalement ouvertes soit en partie ouvertes de façon à réguler une différence de pression entre $C_k$ et $C_{k+1}$.

Dans le cas où l'éluant est un fluide supercritique ou un liquide subcritique, l'alimentation du mélange à séparer peut être effectuée soit directement sans dilution préalable si le mélange est liquide à la température et à la pression d'alimentation soit plus généralement et plus favorablement après dilution dudit mélange dans l'éluant lui-même porté préalablement ou ultérieurement à cette dilution dans des conditions voisines de celles souhaitées par l'opérateur dans la zone considérée (zone III selon la figure 1).

Cette opération de dilution est opérée classiquement selon les règles de l'art habituelles : aussi à titre d'exemple non limitatif, cette opération peut être favorablement réalisée par dissolution du mélange solide à fractionner au sein de l'éluant percolant sur un lit du solide, lequel éluant se trouvant alors dans des conditions où son pouvoir solvant est fixé de façon qu'il atteigne la concentration souhaitée en mélange par saturation : de même, si le mélange est liquide, on pourra favorablement faire percoler l'éluant à l'état de bulles au sein du mélange dans des conditions où il se sature en mélange en atteignant la composition souhaitée : si le mélange à fractionner est gazeux ou liquide, on pourra également favorablement réaliser la dissolution dans l'éluant par mélangeage en ligne, les deux flux étant soigneusement régulés.

Dans le cas où l'éluant est un gaz comprimé la charge à séparer sera de préférence gazeuse ou éventuellement liquide. On pourra alors réaliser l'éventuelle dissolution de la charge liquide dans l'éluant gazeux par exemple.

Cette alimentation du mélange à séparer est favorablement effectuée à une température et à une pression très voisines de celles fixées pour la zone considérée (zone III) ; on minimise ainsi les perturbations du régime d'écoulement et du régime chromatographique dans les colonnes aval. Toutefois, dans une variante intéressante de l'invention, on peut utiliser cette alimentation comme apport d'enthalpie au système ; en effet, la mise en oeuvre la plus favorable du procédé consiste, comme décrit ci-dessus, à réaliser les variations isenthalpiques de pression à travers les vannes de régulation (notées $(U_k)$) : dans certains cas, ladite détente peut s'accompagner d'une baisse notable de la température du fluide qu'il est possible de compenser en introduisant le mélange à fractionner à une température supérieure à ladite température du fluide. De même, la compression du fluide au sein du compresseur (K) est généralement source d'échauffement dudit fluide : il est possible de contrebalancer cet échauffement en introduisant l'appoint d'éluant à une température inférieure à celle du fluide issu de la dernière colonne amont.

Grâce à ces variantes, il est ainsi possible d'obtenir une meilleure stabilisation de la température du fluide traité dans l'ensemble des colonnes chromatographiques et d'éviter des variations de température dans les colonnes lorsqu'elles changent de zone, ce qui peut être préjudiciable à la bonne mise en oeuvre du procédé.

Le raffinat et l'extrait soutirés du procédé proprement dit sont des solutions des produits fractionnés ou séparés, au sein d'une certaine quantité d'éluant. L'application de l'art antérieur tel que décrit par exemple dans le brevet français sus-mentionné FR-A-2584618 permet de séparer l'éluant des produits, ledit éluant pouvant être favorablement recyclé dans le procédé via l'appoint en éluant : un des avantages importants du procédé faisant l'objet de l'invention réside précisément dans la mise en oeuvre aisée de cette opération, où, à la différence des problèmes rencontrés lorsque l'éluant est un solvant liquide classique, cette séparation ne requiert pas de dispositifs complexes, ni de grande consommation d'énergie : de plus, lorsque l'éluant est par exemple du dioxyde de carbone pur, les produits fractionnés ne sont généralement pas pollués par quelque trace de solvant organique résiduel, ce qui constitue un avantage supplémentaire considérable.

La figure 3A représente une variante simplifiée de la figure 1, avec les mêmes références que celles de la figure 1, et dans lesquelles la zone IV est remplacée par une détente et une séparation. En effet, lorsque le contraste de volatilité entre l'éluant, gazeux par exemple, et le constituant de la charge le moins adsorbé est suffisant, il peut être avantageux de procéder à une séparation liquide-vapeur en sortie de la zone III en une seule étape. Sur la figure 3A sont représentés les cas les plus courants :

- une détente adiabatique du gaz par une vanne D suffit à liquéfier une partie du fluide, le raffinat peut être séparé dans l'étage de séparation S et l'éluant vapeur peut être recyclé tel quel étant donné que sa teneur résiduelle en constituant le moins adsorbé est suffisamment faible ;
- une détente adiabatique par une vanne D suivie d'une réfrigération supplémentaire R ou d'un réchauffage, eux-mêmes suivis par une séparation S. Le raffinat est séparé et l'éluant recyclé par le compresseur K ;
- une troisième possibilité non représentée sur la figure peut consister en une recompression de gaz issu de la zone III suivie d'une détente au niveau de pression de l'étage I, éventuellement suivie d'une séparation

Selon ces variantes, les variations de pression entre les différentes zones peuvent être faibles (pertes de charges seulement) mais de manière préférée, au moins une modulation de pression entre deux zones successives peut être réalisée au moyen des vannes de régulation de pression $U_k$ de la figure 5.

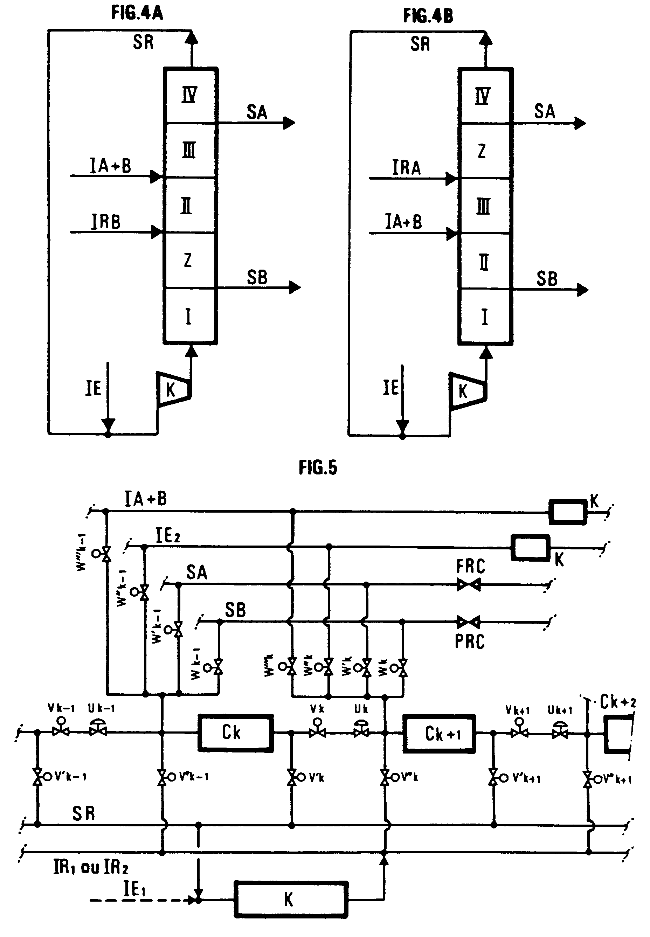

Les figures 4A et 4B montrent deux perfectionnements à la variante décrite en figure 1, avec les mêmes références. Entre les zones I et II, est intercalée une zone Z (Fig. 4A) définie en amont par le point de prélèvement de l'extrait et en aval par un point où l'on réinjecte une partie de l'extrait sensiblement débarrassé de l'éluant.

Pour la réalisation pratique, on affecte en figure 5 le circuit dénommé IE2 à la réinjection du constituant B, l'éluant frais IE étant approvisionné en même temps que le courant de recyclage SR à l'aspiration du compresseur K.

Selon la figure 4B, la zone Z peut être intercalée entre les zones III et IV et définie en amont par un point de réinjection d'une partie du raffinat sensiblement débarrassé de l'éluant et par le point de soutirage du raffinat en aval. Cette partie du raffinat peut donc être injectée en amont de la zone Z.

Les variations de pression entre les zones successives, selon ces figures, peuvent être faibles (pertes de charge uniquement). De façon avantageuse, on peut créer au moins deux et au plus quatre niveaux de pression successifs au moyen d'au moins une et d'au plus trois des vannes de régulation de pression ($U_{k-1}$, $U_k$, $U_{k+1}$) de la figure 5.

La figure 2 représente schématiquement le dispositif adapté à la séparation d'un mélange à 3 composants A, B, C avec les références suivantes :

| | |
|---|---|
| K : | compresseur ou pompe |
| IR1 : | injection du recyclage connecté au refoulement du compresseur |
| IE1 : | injection d'éluant frais |
| zone 0 : | désorption du ou des composants les plus adsorbés et rétention des autres composants |
| SC : | soutirage du ou des composants les plus adsorbés (extrait C) en aval de la zone 0 |
| IR2 : | injection éventuelle de recyclage |
| IE2 : | injection éventuelle d'éluant frais en amont de la zone I |
| zone I : | désorption du ou des composants moyennement adsorbés et les moins adsorbés et rétention du ou des autres composants les plus adsorbés |
| SB : | soutirage du ou des composants moyennement adsorbés en aval de la zone I (extrait B) |
| zone II : | désorption du ou des composants les moins adsorbés et rétention des autres composants |
| IA + B + C : | injection du mélange des composants en amont de la zone III |

zone III : désorption du ou des composants les moins adsorbés et adsorption du ou des composants les plus adsorbés

SA : soutirage du ou des composants les moins adsorbés (raffinat A en aval de la zone III)

zone IV : adsorption du ou des composants les moins adsorbés

SR : soutirage de recyclage connecté à l'aspiration du compresseur.

Dans ce cas de figure, les circuits d'injection concernant le second point de recyclage IR2 et l'injection d'éluant frais en un second point IE2 en amont de la zone I décrits à la figure 5 sont effectivement utilisés.

Avantageusement, au moins deux et au plus cinq niveaux de pression distincts peuvent être modulés dans l'ensemble des zones, la pression diminuant au moins à chaque soutirage et de préférence au moins deux niveaux de pression autres que ceux existant entre les zones 0 et I. Dans ces conditions, au moins une et au plus quatre des vannes de détente connectées d'un côté aux vannes tout ou rien et de l'autre aux colonnes k, k + 1, etc. sont actives et de préférence au moins une vanne autre que celle existant entre les zones 0 et I.

Selon une variante simplifiée illustrée par la figure 3B, on peut remplacer la zone IV de la figure 2 en faisant s'écouler le mélange issu de la zone III dans une vanne de détente D, puis éventuellement dans un organe de réfrigération ou de réchauffage R et dans un séparateur. Le raffinat est alors recueilli tandis que l'éluant séparé est recyclé par le compresseur K à la pression d'injection en amont de la zone 0. Cette variante peut se justifier pour les mêmes raisons qui ont été décrites lors de la description de la figure 3A. Les variations de niveaux de pression entre zones peuvent être faibles (pertes de charge seulement) mais de façon préférée, la pression peut être modulée à raison d'au moins un intervalle de pressions entre deux soutirages successifs, la pression diminuant au moins à chaque soutirage.

L'invention trouve de très nombreuses applications dans les fractionnements de mélanges et séparations de composants provenant, par exemple, des industries chimiques, alimentaires et pharmaceutiques, ainsi que du raffinage et de la pétrochimie.

Exemple 1

Séparation du mélange équimolaire de 1-méthylnaphtalène et de 2-méthylnaphtalène.

L'appareil est réalisé comme décrit ci-dessus à la figure 1 comprenant douze colonnes ou tronçons chromatographiques qui sont des cylindres de 30 cm de longueur et de 6 cm de diamètre remplis d'une phase stationnaire constituée de particules de silice greffée octadécyle (RP 18) d'un diamètre moyen de l'ordre de 35 $\mu$m, connectées en série avec le système de vannes et compression décrit ci-dessus.

L'éluant est constitué de dioxyde de carbone pur. Aucun échangeur de chaleur n'est installé en série entre les colonnes. Plusieurs modes de fractionnement selon le procédé faisant l'objet de l'invention ont été mis en oeuvre, selon le régime isobare à pression sensiblement constante dans les 4 zones, voisine de 146 bars, température égale à 40°C d'une part, selon le régime à modulation du pouvoir d'élution, dans deux cas différents, d'autre part. Les paramètres de fonctionnement et les résultats du fractionnement obtenus lorsque le régime permanent est atteint sont présentés ci-dessous :

Exemple 1a (Comparatif)

Les paramètres opératoires et les résultats obtenus sont les suivants :

Régime à pression sensiblement constante (146 bars), température constante (40°C) et donc masse volumique constante de l'éluant supercritique (750 kg.m$^{-3}$).

Nombre de colonnes ou tronçons par zone : 3.

Débit massique du mélange à séparer : 1,8 kg/h constitué de 0,100 kg/h du mélange des dérivés de naphtalène dissous dans 1,7 kg/h de dioxyde de carbone à 150 bar et 40°C.

Débit massique de l'appoint d'éluant constitué de dioxyde de carbone pur à 150 bar et 40°C: 3,3kg/h.

Débit massique de soutirage du raffinat constitué de 0,050 kg/h de dérivés du naphtalène dissous dans 2,45 kg/h de dioxyde de carbone : 2,5 Kg/h.

Débit massique de soutirage de l'extrait constitué de 0,050 kg/h de dérivés du naphtalène dissous dans 2,55 kg/h de dioxyde de carbone : 2,6 kg/h.

Débit massique sortant du compresseur : 37,2 kg/h.

Composition du raffinat (après séparation du $CO_2$) : 88 % en 2-méthylnaphtalène.

Composition de l'extrait (après séparation du $CO_2$) : 89% en 1-méthylnaphtalène.

La perte de charge dans les 12 colonnes ou tronçons est très faible permettant de considérer le régime à pression sensiblement constante.

La période de décalage est de 10 minutes.

Exemple 1b

Les paramètres opératoires et les résultats obtenus sont les suivants :

Régime à modulation du pouvoir d'élution (éluant supercritique).

Zone I : 3 colonnes ou tronçons

Pression 253 bars          Température 40°C
Masse volumique de l'éluant 900 kg.m$^{-3}$

Zone II : 3 colonnes ou tronçons

Pression 146 bars          Température 37°C
Masse volumique de l'éluant 750 kg.m$^{-3}$

Zone III : Mêmes caractéristiques que zone II.

Zone IV : 3 colonnes ou tronçons

Pression : 128 bars          Température 36°C
Masse volumique de l'éluant 700 kg.m$^{-3}$

Débit massique du mélange à séparer : 1,8 kg/h constitué de 0,100 kg/h du mélange des dérivés de naphtalène dissous dans 1,7 kg/h de dioxyde de carbone pur à 150 bars et 37°C.

Débit massique de l'appoint d'éluant constitué de dioxyde de carbone pur à 253 bars et 36°C : 3,3 kg/h.

Débit massique de soutirage du raffinat constitué de 0,050 kg/h de dérivés du naphtalène dissous dans 2,45 kg/h de dioxyde de carbone : 2,5 kg/h.

Débit massique de soutirage de l'extrait constitué de 0,050 kg/h de dérivés du naphtalène dissous dans 2,55 kg/h de dioxyde de carbone : 2,6 kg/h.

Débit massique sortant du compresseur : 37,2 kg/h.

Composition du raffinat (après séparation du $CO_2$) : 94,5 % en 2-méthylnaphtalène.

Composition de l'extrait (après séparation du $CO_2$) : 93,5 % en 1-méthylnaphtalène.

La perte de charge dans les 12 colonnes ou tronçons est également négligeable, et de plus on peut considérer le régime comme isotherme. La période de décalage est de 10 minutes.

Exemple 1c

Les paramètres opératoires et les résultats obtenus sont les suivants :

Régime à modulation du pouvoir d'élution (éluant supercritique).

Zone I : 1 colonne ou tronçon

Pression 253 bars          Température 40°C
Masse volumique de l'éluant 900 kg.m$^{-3}$

Zone II : 5 colonnes ou tronçons

Pression 164 bars          Température 38°C
Masse volumique de l'éluant 780 kg.m$^{-3}$

Zone III : 5 colonnes ou tronçons

Pression 131 bars          Température 36°C
Masse volumique de l'éluant 710 kg.m$^{-3}$

Zone IV : 1 colonne ou tronçon

Pression 128 bars          Température 36°C

Masse volumique de l'éluant 700 kg.m$^{-3}$

Débit massique du mélange à séparer : 6 kg/h constitué de 0,100 kg/h du mélange des dérivés de naphtalène dissous dans 5,9 kg/h de dioxyde de carbone pur à 135 bars et 40°C.

Débit massique de l'appoint d'éluant constitué de dioxyde de carbone pur à 253 bars et 40°C : 1,1 kg/h.

Débit massique de soutirage du raffinat constitué de 0,050 kg/h de dérivés du naphtalène dissous dans 5,05 kg/h de dioxyde de carbone : 5,1 kg/h.

Débit massique de soutirage de l'extrait constitué de 0,050 kg/h de dérivés du naphtalène dissous dans 2,55 kg/h de dioxyde de carbone : 2,6 kg/h.

Débit massique sortant du compresseur : 35 kg/h.

Composition du raffinat (après séparation du $CO_2$) : 99,8% en 2-méthylnaphtalène.

Composition de l'extrait (après séparation du CO2) : 99,7 % en 1-méthylnaphtalène.

La perte de charge dans les 12 colonnes ou tronçons est très faible, et de plus on peut considérer le régime comme isotherme. La période de décalage est de 10 minutes.

On remarque que dans ces exemples 1a, 1b et 1c, on travaille avec un éluant supercritique c'est-à-dire avec des pressions et des températures dans les zones supérieures ou égales à la pression et à la température critiques. Ceci présente deux avantages bien connus :

- d'une part la séparation solutés/solvant se fait plus aisément qu'avec un liquide ou un gaz par simple réduction de pression et/ou éventuellement de température, ce qui préserve la pureté des extraits et raffinats qui sont soutirés à l'état de solutés dans l'éluant et ont été séparés sans opérations complexes, surtout si ces composants sont thermolabiles ;

- d'autre part quand, même dans un procédé dit 〈〈à contre-courant réel ou simulé〉〉, on utilise un éluant liquide, on ne peut faire varier le pouvoir éluant ou solvant ce qui implique des variations importantes des débits massiques dans les différents zones ; or dans les conditions de l'invention, il est possible de faire varier ce pouvoir éluant ou solvant ce qui évite d'avoir à modifier fortement les débits massiques d'éluant dans les différentes zones. Ceci simplifie la réalisation et la mise en oeuvre ;

- mais cela permet également de moduler ce pouvoir éluant et de faire varier la tendance à la rétention ou à l'élimination successives des divers composants et à permettre d'augmenter de façon très surprenante les concentrations en composants des extraits ou raffinats (88 et 89 %, exemple 1a : 94,5 % et 93,5 %, exemple 1b avec des pressions échelonnées : 99,8 et 99,7 % exemple 1c avec des pressions échelonnées et des nombres de tronçons ou colonnes différents d'une zone à la suivante : 1-5-5-1). Il apparaît que grâce au décalage, à un choix adéquat des nombres de tronçons ou colonnes pour chaque palier de pression lui-même adéquatement choisi, en combinaison avec les techniques de chromatographie supercritique, on peut parvenir à des rendements très élevés. Ces choix peuvent être aisément maîtrisés par l'homme de l'art qui dispose des dispositifs conformes à l'invention et des données correspondant au procédé.

Exemple 2

Séparation de deux des isomères du dibromothiophène avec éluant liquide subcritique (3,4-dibromothiophène et 2,5 dibromothiophène en mélange équimolaire).

Sur le même équipement que celui décrit dans le précédent exemple d'application, avec la même phase stationnaire et le même éluant, le procédé faisant l'objet de l'invention a été mis en oeuvre dans des domaines où le dioxyde de carbone est un liquide dit subcritique en régime de pression sensiblement constante d'une part, en régime de modulation du pouvoir d'élution d'autre part.

Exemple 2a (Comparatif)

Les paramètres opératoires et les résultats obtenus sont les suivants :

Régime isobare à pression sensiblement constante (81 bars), à température constante (23°C) et donc à masse volumique constante (800 kg.m$^{-3}$) avec éluant liquide subcritique.

- Nombre de colonnes ou tronçons par zone : 3 ;
- Débit massique du mélange à séparer : 4,4 kg/h constitué de 0,200 kg/h de dibromothiophènes dissous dans 4,2 kg/h de dioxyde de carbone à 85 bars et 23°C ;
- Débit massique de l'appoint d'éluant : 4 kg/h constitué de dioxyde de carbone pur à 85 bars et 10°C ;

- Débit de soutirage de raffinat : 4,4 kg/h constitué de 0,100 kg/h de dibromothiophènes dissous dans 4,3 kg/h de $CO_2$ ;
- Débit massique de soutirage d'extrait : 4,4 kg/h constitué de 0,100 kg/h de dibromothiophènes dissous dans 4,3 kg/h de $CO_2$.
- Débit massique sortant du compresseur : 31 kg/h
- composition du raffinat (après séparation du $CO_2$) : 90 % de 2,5 dibromothiophène.
- Composition de l'extrait (après séparation du $CO_2$) : 88 % de 3,4 dibromothiophène ;

La perte de charge dans les 12 colonnes ou tronçons est très faible. La période de décalage est de 10 minutes.

Exemple 2b

Les paramètres opératoires et les résultats obtenus sont les suivants :

Régime à modulation du pouvoir d'élution avec éluant liquide subcritique.

Zone I : 1 colonne ou tronçon

Pression 212 bars      Température 30°C
Masse volumique de l'éluant : 900 kg.m$^{-3}$

Zone II : 5 colonnes ou tronçons

Pression 122 bars      Température 26°C
Masse volumique de l'éluant: 850 kg.m$^{-3}$

Zone III : 5 colonnes ou tronçons

Pression 84 bars      Température 28°C
Masse volumique de l'éluant : 750 kg.m$^3$

Zone IV : 1 colonne ou tronçon

Pression 75 bars      Température 27°C
Masse volumique de l'éluant : 700 kg.m$^3$

- Débit massique du mélange à séparer : 9 kg/h constitué de 0,200 kg/h de mélange de dibromothiophènes dissous dans 8,8 kg/h de dioxyde de carbone à 90 bars et 38°C ;
- Débit massique de l'appoint d'éluant : 4,4 kg/h constitué de dioxyde de carbone pur à 220 bars et 0°C ;
- Débit de soutirage de raffinat : 7,4 kg/h constitué de 0,100 kg/h de dibromothiophènes dissous dans 7,3 kg/h de $CO_2$ ;
- Débit massique de soutirage d'extrait : 6 kg/h constitué de 0,100 kg/h de dibromothiophènes dissous dans 5,9 kg/h de $CO_2$ ;
- Débit massique sortant du compresseur : 31 kg/h ;
- Composition du raffinat (après séparation du $CO_2$) : 99,9 % de 2,5 dibromothiophène.
- Composition de l'extrait (après séparation du $CO_2$) : 99,8 % de 3,4 dibromothiophène ;

Période de décalage 10 minutes : régime pratiquement isotherme.

Dans ces exemples 2a et 2b, on travaille avec un éluant liquide subcritique, (pression supérieure à la pression critique, température inférieure à la température critique). L'exemple 2a est mis en oeuvre à pression pratiquement constante et donne des teneurs de 88 et 90 % ; l'exemple 2b à pressions échelonnées et paliers de pression à nombres de colonnes ou de tronçon variables d'une zone à l'autre (1-5-5-1) donne des teneurs très élevées de 99,8 et 99,9 %. On constate donc que choisissant judicieusement les paramètres, l'homme de l'art qui dispose des dispositifs et des données du procédé conformes à l'invention peut parvenir à des rendements élevés par des moyens simples.

On notera que si, dans les exemples, on a utilisé le dioxyde de carbone pur comme éluant, il est possible d'utiliser, du dioxyde de carbone auquel on ajoute un modificateur (alcool, cétone, hydrocarbure ou autre) ou d'autres éluants (protoxyde d'azote, chlorofluorocarbones, alcanes et alcènes en $C_2$ à $C_5$ ou autres).

Exemple 3 : Séparation de deux isomères du pentane sur tamis moléculaire 5A illustrant la mise en oeuvre d'un éluant gazeux comprimé selon i'invention

Pour la séparation des normales iso-paraffines deux procédés concurrents employant le même adsorbant : le tamis moléculaire 5A, peuvent être trouvés dans l'art antérieur :

A) un procédé dit 〈〈PSA〉〉essentiellement discontinu dont les inconvénients sont de faire appel au minimum à 3 (et au plus généralement à 4) réacteurs d'adsorption différents, de fonctionner à des températures élevées (typiquement 300 à 400°C) et d'utiliser des niveaux de pression très différents par exemple 15 à 35 bar en adsorption et 0,5 à 3 bar absolus en désorption.

B) Un procédé en phase liquide à contre-courant simulé (dénomination commerciale 〈〈Molex〉〉) qui utilise un mélange de normal et d'isobutane comme désorbant.

L'inconvénient du procédé 〈〈Molex〉〉 comme celui du procédé 〈〈Parex〉〉 de séparation des xylènes est de travailler en phase liquide : il a en effet été démontré dans le cas des xylènes (G. Storti, M. Mazzoti, L.T. Furlan, M. Morbidelli, S. Carra, Separ. Sci. and Tech., 27 (14), (1992) p. 1889-1916) que la mise en oeuvre en phase vapeur peut être nettement plus avantageuse que la mise en oeuvre en phase liquide. La raison essentielle de cette supériorité tient aux masses volumiques respectives des produits à séparer en phase vapeur, en phase liquide et en phase adsorbée : exprimée en pourcentage volumique de la colonne de séparation la porosité de lit représente environ 35 % tandis que le volume microporeux du tamis moléculaire (le seul utile pour la séparation) représente de 11 à 14% soit grossièrement trois fois moins.

Lorsqu'on travaille en phase liquide, les masses volumiques respectives de la phase adsorbées et de la phase liquide sont à peu près équivalentes : la séparation qui s'effectue sur 1 g de matière adsorbée se trouve en partie annulée par la dilution avec 3 g de matière non adsorbée. Au contraire, lorsqu'on travaille en phase vapeur les masses volumiques respectives des phases adsorbées et vapeur sont dans un rapport 20 à 500 suivant la pression mise en jeu. Ainsi pour 1 g de matière adsorbée, on trouve de 0,006 g à 0,15 g de matière non adsorbée. Cependant, il n'est pas suggéré dans la littérature ni par Storti et al., (déjà cité) ni par Raghuram et al.(1992) (S. Raghuram, S.A. Wilcher, Separ. Sci. and Tech., 27 (14), p. 1917-1954,) qui comparent les avantages respectifs du PSA, et du Molex de moyen industriellement réaliste de réaliser un contre-courant simulé en phase vapeur. En effet, les premiers condensent et revaporisent le courant de recyclage, tandis que, dans le cas du procédé PSA la température et le taux de compression sont beaucoup trop forts pour qu'aucun compresseur commercial ne puisse réaliser de recyclage entre la zone de basse pression et la zone de haute pression.

3.a. : Selon l'art antérieur (procédé Molex) on cherche à séparer sur une zéolithe (tamis moléculaire 5A) 50 t/h de mélange à 20 % poids de n pentane et 80 % poids d'isopentane à 100°C, en phase liquide au moyen d'un mélange éluant constitué de 85 % poids de n-butane et 15 % poids d'isobutane.

En zone I le débit interne est 78 t/h, à l'entrée de cette zone on injecte 31 t/h de solvant d'élution et l'on recueille 26,5 t/h d'extrait à la sortie.

En zone II le débit interne est 51,5 t/h.

En zone III le débit interne est 101,5 t/h ; à l'entrée de cette zone on injecte 50 t/h de charge et l'on recueille 54,5 t/h de raffinat à la sortie.

En zone IV le débit interne est de 47 t/h, ce débit est recyclé vers l'entrée de la zone I par une pompe. On dispose de six lits de 4,7 m$^3$ chacun et la période de permutation est fixée à 1 minute 30 secondes. On trouve deux lits en zone I, un lit en zone II, deux lits en zone III et un lit en zone IV. La durée totale du cycle est de 9 minutes.

3.b. : Comparativement, on cherche à réaliser la même séparation en phase vapeur à sensiblement 6 bar et 150°C, la charge, et l'éluant et l'absorbant étant identiques à ceux de l'exemple précédent.

En zone I le débit interne est de 26 t/h ; à l'entrée de cette zone on injecte 24,5 t/h de solvant d'élution et l'on recueille 23,5 t/h d'extrait à sa sortie.

En zone II le débit interne est de 2,5 t/h.

En zone III le débit interne est de 52,5 t/h ; à l'entrée de cette zone on injecte 50 t/h de charge et l'on recueille 51 t/h de raffinat à la sortie.

En zone IV le débit interne est de 1,5 t/h, ce débit est recyclé vers l'entrée de la zone I par un compresseur.

Le coefficient de compressibilité de l'éluant dans ces conditions est de 0,94.

On dispose de six lits de 3,75 m$^3$ chacun et la période de permutation est fixée à 1 minute 30 secondes : on trouve deux lits en zone I, un lit en zone II, deux lits en zone III et un lit en zone IV. La durée totale du cycle est de neuf minutes.

3.c. : Toujours comparativement, on reprend l'intégralité de l'exemple 3b en supprimant la zone IV dans un but de simplification (voir figure 3A).

Les débits obtenus sont les suivants :

Zone I : 26 t/h, solvant 26 t/h, Extrait 23,5 t/h
Zone II : 2,5t/h
Zone III : 52,5 t/h, charge 50 t/h, Raffinat 52,5 t/h.

coefficient de compressibilité de l'éluant : 0,94

On dispose de cinq lits de 3,75 $m^3$ chacun et la période de permutation est fixée à 1 minutes 30 secondes, on trouve deux lits en zone I, un lit en zone II, deux lits en zone III ; la durée totale du cycle est de 7 minutes 30 secondes. Par rapport à la réalisation de l'exemple 3b au prix d'une légère surconsommation de solvant on simplifie l'installation et on économise 17 % de l'inventaire opératoire de tamis.

3.d. : Selon l'invention on cherche à réaliser la même séparation que dans les exemples 3a, 3b, 3c avec de l'éthane gazeux employé comme désorbant.

En zone I, la pression et la température sont respectivement 100°C et 46 bar, le débit interne est 31,5 t/h ; à l'entrée de cette zone on injecte 24 t/h de solvant et l'on recueille 23,5 t/h d'extrait à sa sortie.

En zone II, la pression et la température sont respectivement 100°C et 46 bar, le débit interne est 8 t/h.

En zone I et II la compressibilité de l'éthane est 0,82 .

En zone III, la pression et la température sont respectivement 90°C et 4,8 bar, le débit interne de 58 t/h ; à l'entrée de cette zone on injecte 50 t/h de charge et à sa sortie on recueille 50,5 t/h de raffinat.

En zone IV, la pression et la température sont respectivement 90°C et 4,8 bar, le débit interne de 7,5 t/h

Le coefficient de compressibilité de l'éthane dans les conditions des zones III et IV est de 0,98.

On dispose de six lits de 5 $m^3$ chacun et la période de permutation est de 2 minutes : on trouve deux lits en zone I, deux lits en zone II, deux lits en zone III et un lit en zone IV. La durée totale du cycle est donc de 12 minutes. Par rapport à l'exemple 3c on utilise deux fois plus d'adsorbant et une quantité d'éluant équivalente. L'avantage de cette mise en oeuvre ressort sur les séparations subséquentes du solvant de l'extrait et du raffinat. Dans les trois premiers cas on utilise des colonnes à distiller alors que, dans le quatrième cas, on utilise pour l'extrait une série de deux détentes 《flash》 et pour le raffinat une simple détente 《flash》. Une particularité de cette variante de mise en oeuvre est que le recyclage de la zone IV vers la zone I ne se fait pas à débit constant à la sortie de la zone IV puisqu'il s'agit d'une détente de colonne de cette zone de 46 à 4,8 bar. De même, la seconde des deux colonnes de la zone II ne présente pas à son entrée un débit constant puisqu'il faut la repressuriser de 4,8 bar à 46 bar.

Les résultats en pureté d'isopentane et en rendement sont équivalents pour les quatre exemples 3a, 3b, 3c, 3d : pureté de l'isopentane dans le raffinat supérieur à 98 %, rendement en isopentane dans le raffinat supérieur à 98 %.

Les dispositifs et procédés conformes à l'invention permettent donc d'atteindre des résultats surprenants par les teneurs et rendements avec des éluants à pression supérieure ou égale à la pression critique et à température supérieure ou égale (fluide supercritique), ou inférieure (liquide subcritique) à la température critique,ou encore, avec des éluants gazeux comprimés, à pression inférieure à la pression critique, et présentant un coefficient de compressibilité sensiblement différent de 1, la température pouvant être soit supérieure soit inférieure à la température critique.

Exemple 4 :

Le mélange à fractionner est constitué de 1 -méthylnaphtalène (33 % en masse), 2-méthylnaphtalène (33 % en masse) et de composés plus lourds assimilables aux isomères du triméthylnaphtalène (33 % en masse).

L'appareil (figure 2), comprend quinze colonnes ou tronçons chromatographiques qui sont des cylindres de 30 cm de longueur et de 6 cm de diamètre remplis d'une phase stationnaire constituée de particules de silice greffée octadécyle (RP 18) d'un diamètre moyen de l'ordre de 35 micromètres, connectés en série avec le système de vannes et compresseur décrit ci-dessous.

L'éluant est constitué de dioxyde de carbone pur. Aucun échangeur de chaleur n'est disposé en série entre les colonnes. Plusieurs modes de fonctionnement selon le procédé faisant l'objet de l'invention ont été mis en oeuvre selon le régime à deux états de pression décrits dans le brevet FR-A-2651149, (zone 0 et zones I, II, III et IV) et selon le régime à modulation de pression décrit dans la présente invention d'autre part.

Exemple 4a (Comparatif)

Les paramètres opératoires et les résultats obtenus sont les suivants :

- Régime à deux états du solvant (solvant 《fort》, solvant 《faible》 au sens du brevet FR-2 651 149 )
- Nombre de colonnes ou tronçons par zone : 3;

- Régime : quasi-isotherme au voisinage de 40°C ;
- Période de décalage : 10 minutes ;
- Pression dans la zone 0 (solvant fort) : 253 bar ; Masse volumique de l'éluant : 900 $kg.m^{-3}$;
- Pression dans les zones I, II, III et IV (solvant faible) : 146 bar Masse volumique de l'éluant : 750 $kg.m^{-3}$
- Débits et compositions des entrées/sorties :

| Flux | Appoint éluant IE1 | IR1 | IA+B+C | SA | SB | SC |
|---|---|---|---|---|---|---|
| Débit massique kg/h | 5 | 39,0 | 1,6 | 2,0 | 2,40 | 2,20 |
| CO2 kg/h | 5 | 39,0 | 1,45 | 1,96 | 2,34 | 2,15 |
| Produits Débit kg/h | 0 | 0 | 0,15 | 0,041 | 0,060 | 0,049 |
| Composition % masse | | | | | | |
| 2-méthylnaphtalène | – | – | 33 | 92,2 | 16,0 | 5,3 |
| 1-Méthylnapthalène | – | – | 33 | 6,8 | 68,9 | 11,7 |
| Triméthylnaphtalènes | – | – | 33 | 1,0 | 15,1 | 83,0 |

Exemple 4b :

- Régime à modulation de pression conforme à la présente invention ;
- Régime quasi-isotherme au voisinage de 40°C :
- Période de décalage : 8 minutes ;
- Caractéristiques des zones :

    Zone 0 : 3 colonnes de pression 212 bars : masse volumique du solvant : 850 $kg.m^{-3}$ ;
    Zone I : 3 colonnes ; pression 146 bars ; masse volumique du solvant : 780 $kg.m^{-3}$
    Zone II : 3 colonnes ; pression 146 bars ; masse volumique du solvant : 750 $kg.m^{-3}$
    Zone III : 3 colonnes ; pression 131 bars, masse volumique du solvant : 710 $kg.m^{-3}$
    Zone IV : 3 colonnes ; pression 128 bars : masse volumique du solvant : 700 $kg.m^{-3}$

- Débits et compositions entre entrées/sorties :

| Flux | Appoint éluant IE1 | IR1 | IA+B+C | SA | SB | SC |
|---|---|---|---|---|---|---|
| Débit massique kg/h | 2 | 39,0 | 2,2 | 1,2 | 0,5 | 2,5 |
| CO2 kg/h | 2 | 39,0 | 2,05 | 1,15 | 0,46 | 2,454 |
| Produits Débit kg/h | – | – | 0,15 | 0,050 | 0,054 | 0,045 |
| Composition % masse | | | | | | |
| 2-méthylnaphtalène | – | – | 33 | 98,5 | 1,6 | 1,4 |
| 1-Méthylnapthalène | – | – | 33 | 1,1 | 92,7 | 1,5 |
| Triméthylnaphtalènes | – | – | 33 | 0,4 | 5,7 | 97,1 |

On constate que les performances sont nettement supérieures dans le cas de la modulation de pression par rapport à celles obtenues dans l'autre cas (4a).

Exemple 5 : Fractionnement d'un mélange de bromothiophènes

Le mélange à fractionner est constitué de 2,5-bromothiophène (33 % en masse), de 3,4 dibromothiophène (33 % en masse) et de 2,3,4,5-tétrabromothiophène (33 % en masse).

L'appareil est identique à celui utilisé dans l'exemple précédent et à l'exemple 1 (figure 3).

L'éluant utilisé est le trifluorobrométhane ($CF_3Br$) dont les coordonnées critiques sont 39,7 bar et 67°C. Plusieurs modes de fonctionnement de l'appareillage et selon le procédé faisant l'objet de l'invention ont été mis en oeuvre selon le régime à pression sensiblement constante dans les cinq zones voisines de 70 bar, (température égale à 80°C) d'une part, et d'autre part selon le régime à modulation de pression décrit dans la présente demande.

Dans les exemples ci-dessous, les zones comprenant les nombres de colonnes suivants : zone 0 : une : zone I : trois : zone II : cinq : zone III : cinq : zone IV : une. La période de décalage est fixée à 3,3 minutes dans tous les cas.

Exemple 5.a (Comparatif) :

Les paramètres opératoires et les résultats obtenus sont les suivants :

- Régime à pression sensiblement constante (70 bars), température constante (80°C), masse volumique de l'éluant constante (1050 $kg.m^{-3}$) ;

- La perte de charge dans les colonnes ou tronçons est faible et de plus le régime peut être considéré comme isotherme ;

- Débits et concentrations des entrées/sorties :

| Flux | Appoint éluant IE1 | IR1 | IA+B+C | SA | SB | SC |
|---|---|---|---|---|---|---|
| Débit massique kg/h | 73 | 120 | 14 | 15 | 15 | 57 |
| CF3Br kg/h | 73 | 120 | 13 | 17,67 | 14,6 | 56,73 |
| Produits Débit kg/h | 0 | 0 | 1 | 0,33 | 0,40 | 0,27 |
| Composition % masse 2-,5dibromothiophène | – | – | 33 | 93 | 3,3 | 5,9 |
| 3,4 dibromothiophène | – | – | 33 | 2,3 | 80 | 3,1 |
| 2,3,4,5 tétrabromo- thiophène | – | – | 33 | 4,7 | 16,7 | 91,0 |

Exemple 5b

Les paramètres opératoires et les résultats obtenus sont les suivants :

• Régime à modulation de pression de l'éluant, isotherme à 80°C ;

Zone 0 : pression 100 bar; masse volumique de l'éluant: 1280 kg.m$^{-3}$;
Zone I : pression 81 bar ; masse volumique de l'éluant : 1150 kg.m$^{-3}$
Zone II : pression 76 bar ; masse volumique de l'éluant : 1100 kg.m$^{-3}$
Zone III : pression 68 bar, masse volumique de l'éluant : 950 kg.m$^{-3}$
Zone IV : pression 64 bar ; masse volumique de l'éluant: 900 kg.m$^{-3}$

• Débits et compositions entre entrées/sorties :

| Flux | Appoint éluant IE1 | IR1 | IA+B+C | SA | SB | SC |
|---|---|---|---|---|---|---|
| Débit massique kg/h | 73 | 120 | 14 | 15 | 15 | 57 |
| CF3Br kg/h | 73 | 120 | 13 | 14,67 | 14,6 | 56,73 |
| Produits Débit kg/h | 0 | 0 | 1 | 0,33 | 0,40 | 0,27 |
| Composition % masse 2,5 dibromothiophène | – | – | 33 | 99,9 | 0,1 | 0,1 |
| 3,4 dibromothiophène | – | – | 33 | – | 83,8 | – |
| 2,3,4,5 tétrabromo-thiophène | – | – | 33 | 0,1 | 16,1 | 99,9 |

On constate que le régime à modulation de pression conduit à des fractions nettement plus pures que celles de l'autre régime, le débit de solvant et le débit de charge traité restant les mêmes.

De plus, l'expérience a montré que quand on travaille avec un dispositif tel celui de la figure 3B on obtient des résultats quantitatifs et qualitatifs très voisins de ceux obtenus aux exemples 4b et 5b ci-dessus.

De même, avec l'appareillage de la figure 3A, les résultats quantitatifs et qualitatifs sont très voisins de ceux obtenus selon la figure 1.

Mais dans ces cas (mise en oeuvre des appareillages des figures 3A et 3B), les appareillages et leur utilisation sont simplifiés de façon appréciable.

Pour illustrer de façon plus détailée les dispositifs conformes à l'invention, on se reportera à la figure 5 représentant schématiquement le montage de deux zones, colonnes ou tronçons de colonnes $C_k$ et $C_{k+1}$.

On retrouvera ici les éléments de la figure 2.

Entre chaque paire de zones, de tronçons ou de colonnes $C_k$ et $C_{k+1}$, on dispose deux vannes dont l'une est à passage total/fermeture totale (tout ou rien) dénommée $V_k$ et une vanne de régulation permettant de réaliser la baisse de pression ou la détente souhaitée, dénommée $U_k$, de plus, deux vannes à passage total/fermeture totale (tout ou rien) sont connectées aux deux lignes d'aspiration SR et de refoulement IR du compresseur K (ou de la pompe éventuelle) et sont dénommées $V'_k$ et $V''_k$. Avec ce système simple, on peut donc moduler les pressions dans toutes les colonnes de l'appareil, et en particulier déplacer les différentes zones susnommées afin de réaliser la mise en oeuvre du procédé objet de l'invention.

A cette disposition, on ajoute les éléments suivants qui permettent notamment l'alimentation d'une partie de l'éluant (entre zones 0 et I de la figure 2 par exemple) en utilisant, dans le dispositif schématisé sur la figure 5, les vannes à ouverture/fermeture totale (《 《tout ou rien 》》) V''' et la vanne de régulation U : ladite vanne U permet de détendre le fluide à la pression d'entrée dans la zone I (ligne notée IR2) et peut avantageusement être manoeuvrée par régulation du débit dans cette branche de circuit ; lesdites vannes V''' sont manoeuvrées dans les mêmes conditions que les vannes V'k. Si l'opérateur ne souhaite pas utiliser ce recyclage entre zones (0 et I, figures 1 à 4), il peut fermer à la fois la vanne U et l'ensemble des vannes V''', la totalité du fluide éluant étant alors distribuée par la ligne notée IR1.

En ce qui concerne la variante avec pompe P et séparateur S, afin d'alimenter cette pompe, on condense le solvant dans un échangeur de chaleur et on le stocke dans un réservoir intermédiaire qui permet d'obtenir un pompage plus régulier ; le fluide comprimé issu de la pompe est ensuite porté à la température de travail grâce à un échangeur de chaleur. Le système est classiquement utilisé en extraction/fractionnement par fluide supercritique et n'a pas été représenté sur les figures.

## Revendications

1. Dispositif de fractionnement d'un mélange de p composants en p composants ou q coupes, q étant inférieur ou égal à p, dispositif présentant un ensemble de n colonnes chromatographiques ou tronçons de colonne chromatographique montés en série et en boucle fermée, présentant au moins r courants d'injection et au plus n points d'injection par courant d'injection et présentant q courants de soutirage et au plus n points de soutirage par courant de soutirage, les points d'injection et de soutirage des différents courants pouvant avantageusement être confondus, les courants d'injection et de soutirage étant alternés le long de la série de colonnes ou de tronçons, r, n, p et q étant des entiers définis comme suit :

p : représente le nombre de composants présents dans la charge $p \geq 2$;
q : représente le nombre de coupes ou d'effluents distincts issus du procédé $q \geq 2$ :
n : représente le nombre de colonnes ou de tronçons de colonne distincts mis en jeu : $n \geq 3$;
r : représente le nombre de courants d'injection distincts dans le dispositif et favorablement $q \geq r \geq 2$;
la boucle étant formée de m zones chromatographiques successives tel que (I, II, III ; I, II, III, IV ; 0, I, II, III, IV ; I, Z, II, III, IV ; I, II, III, Z, IV), chacune de ces zones étant constituée par au moins une colonne ou un tronçon ($C_k$);
m : représente le nombre de zones : $3 \leq m \leq q + r$ ;

au moins un point et au plus deux ($IR_1$, $IR_2$) entre deux zones servant à l'injection d'éluant (soit recyclé, soit frais, soit recyclé et frais en appoint), au moins un point entre deux zones (IA+B ou IA+B+C ) servant à l'injection du mélange à fractionner, au moins un point de soutirage d'un raffinat (SA) entre chaque point d'injection du mélange et le point d'injection d'éluant suivant situé en aval dans le sens de circulation de l'éluant du point d'injection du mélange, au moins un point de soutirage d'un extrait (SB, SC) entre chaque point d'injection d'éluant et le point d'injection du mélange situé en aval dans le sens de la circulation d'éluant, un point de soutirage (SR) d'un courant de recyclage connecté à la zone IV quand ladite zone IV est présente ou connecté à un séparateur S quand ladite zone n'est pas présente, un dispositif de commande permettant de décaler dans le temps dans un même sens (aval ou amont) les points d'injection ($IR_1$, $IR_2$, IA+B ou IA+B+C ) et de soutirage (SC, SB, SA, SR) d'au moins un tronçon ou colonne, le dispositif comprend un compresseur ou une pompe dont l'aspiration est connectée au point de soutirage du courant de recyclage (SR) et éventuellement à un appoint d'éluant frais et dont le refoulement est connecté à au moins un point d'injection du courant de recyclage ($IR_1$ ou $IR_2$), en amont du point de soutirage d'extrait (SC, SB) le plus en amont, le compresseur ou la pompe étant adapté à délivrer audit point d'injection du courant de recyclage, soit un gaz comprimé dont la pression est inférieure à la pression critique dudit gaz et qui présente un coefficient de compressibilité sensiblement différent de 1 , soit un fluide supercritique, soit un liquide subcritique ; lorsque le dispositif comporte trois zones (I, II, III), quatre zones (I, II, III, IV) ou cinq zones (I, Z, II, III, IV ou I, II, III, Z, IV) adaptées à la séparation de deux composants ou de deux coupes, au moins un organe $U_k$ de réduction de pression ou de détente assure une variation de pression entre une zone (ou la colonne ou le tronçon et la zone (ou la colonne ou le tronçon) immédiatement en aval, et lorsque le dispositif comporte quatre zones 0, I, II, III ou cinq zones (0, I, II, III et IV) adaptées à la séparation de trois composants ou trois coupes, au moins un organe $U_k$ de réduction de pression ou de détente est situé entre deux points de soutirage autres que le point de soutirage de l'extrait, SC existant entre les zones 0 et I, le dit organe $U_k$ de réduction de pression étant relié audit dispositif de commande de décalage dans le temps.

2. Dispositif selon la revendication 1 comportant trois zones successives I, II, III adaptées à la séparation de deux composants ou de deux coupes, dans lequel la zone III (en amont de laquelle est injecté le mélange A + B) est immédiatement suivie par un organe de détente et de séparation de l'éluant et du raffinat, l'organe de détente et de séparation comprenant le point de soutirage du raffinat et le point de soutirage de recyclage de l'éluant (SR) qui est connecté au compresseur ou à la pompe, ce qui permet de supprimer la zone IV.

3. Dispositif selon l'une des revendications 1 à 2 dans lequel on intercale entre les zones I et II une zone Z définie en amont par le point de soutirage de l'extrait (SB) et en aval par un point de réinjection (IRB) d'une partie de l'extrait sensiblement débarrassé de l'éluant.

4. Dispositif selon l'une des revendications 1 à 2 dans lequel on intercale en aval de la zone III une zone Z définie en amont par un point de réinjection (IRA) d'une partie du raffinat sensiblement débarrassé de l'éluant et en aval par le point de soutirage du raffinat (SA).

5. Dispositif selon la revendication 1 dans lequel lorsqu'il y a quatre zones (0, I, II, III) ou cinq zones (0, I, II, III, IV) au moins un organe de réduction de pression ou de détente supplémentaire connecté au dispositif de commande de décalage dans le temps est situé entre la zone 0 et la zone I.

6. Dispositif selon l'une des revendications 1 et 5 comportant quatre zones successives 0, I, II, III pour la séparation de trois composants A, B, C ou trois coupes dans lequel la zone III (celle en aval du point d'injection du mélange A + B + C ) est immédiatement suivie par un organe de détente et de séparation du raffinat (de l'éluant et du constituant A), l'organe de détente et de séparation comprenant le point de soutirage du raffinat (SA) et le point de soutirage de recyclage de l'éluant (SR) qui est connecté au compresseur ou à la pompe, ce qui permet de supprimer la zone IV.

7. Procédé de fractionnement d'un mélange de p composants en p composants ou q coupes, q étant inférieur ou égal à p, dans un dispositif présentant un ensemble de n colonnes chromatographiques ou tronçons de colonne chromatographique montés en série et en boucle fermée, présentant au moins r courants d'injection et au plus n points d'injection par courant d'injection et présentant q courants de soutirage et au plus n points de soutirage par courant de soutirage, les points d'injection et de soutirage des différents courants pouvant avantageusement être confondus, les courants d'injection et de soutirage étant alternés le long de la série de colonnes ou de tronçons, r, n, p et q étant des entiers définis comme suit :

p : représente le nombre de composants présents dans la charge $p \geq 2$;
q : représente le nombre de coupes ou d'effluents distincts issus du procédé $q \geq 2$;
n : représente le nombre de colonnes ou de tronçons de colonne distincts mis en jeu : $n \geq 3$;
r : représente le nombre de courants d'injection distincts dans le dispositif et favorablement $q \geq r \geq 2$;
la boucle étant formée de m zones chromatographiques successives tel que (I, II, III ; I, II, III, IV ; 0, I, II, III, IV ; I, Z, II, III, IV ; I, II, III, Z, IV), chacune de ces zones étant constituée par au moins une colonne ou un tronçon ($C_k$);
m : représente le nombre de zones : $3 \leq m \leq q + r$;

au moins un point et au plus deux ($1R_1$, $IR_2$) entre deux zones servant à l'injection d'éluant (soit recyclé, soit frais, soit recyclé et frais en appoint), au moins un point entre deux zones (IA+B ou IA+B+C ) servant à l'injection du mélange à fractionner, au moins un point de soutirage d'un raffinat (SA) entre chaque point d'injection du mélange et le point d'injection d'éluant suivant situé en aval dans le sens de circulation de l'éluant du point d'injection du mélange, au moins un point de soutirage d'un extrait (SB, SC) entre chaque point d'injection d'éluant et le point d'injection du mélange situé en aval dans le sens de la circulation d'éluant, un point de soutirage (SR) d'un courant de recyclage connecté à la zone IV quand ladite zone IV est présente ou connecté à un séparateur S quand ladite zone n est pas présente, procédé dans lequel on décale dans le temps dans un même sens (aval ou amont) les points d'injection ($IR_1$, $IR_2$, IA+B ou IA+B+C ) et de soutirage (SC, SB, SA, SR) d'au moins un tronçon ou colonne, le procédé étant mis en oeuvre:

• soit avec injection comme éluant d'un gaz comprimé dont la pression en tout point des zones est inférieure à la pression critique du gaz, le gaz présentant un coefficient de compressibilité sensiblement différent de 1 en tout point d'au moins une zone et de manière préférée en tout point d'au moins deux zones à partir du point d'injection de l'éluant ;
• soit avec injection comme éluant d'au moins un fluide supercritique;
• soit avec injection comme éluant d'au moins un liquide subcritique ;

le procédé étant en outre éxécuté de façon telle que, en vue de la séparation d'un mélange en deux composants, ou deux coupes, on maintient la pression dans une colonne (ou une zone) supérieure à celle dans la colonne (ou la zone) immédiatement en aval sauf en chaque point d'injection d'éluant où la pression croît jusqu'à la pression d'injection : et que, en vue de la séparation d'un mélange en trois composants ou trois coupes, on fait décroître la pression d'au moins un intervalle entre deux points de soutirage autres que le point de soutirage de l'extrait existant entre les zones 0 et I.

8. Procédé selon la revendication 7 dans lequel on fait décroître la pression d'au moins un intervalle entre deux points de soutirage depuis l'injection amont de l'effluent (IR1) jusqu'au point de soutirage de recyclage (SR).

9. Procédé selon l'une des revendications 7 et 8 dans lequel le fluide éluant est injecté dans la boucle à une température différente de la température opératoire.

**10.** Procédé selon l'une des revendications 7 à 9 dans lequel on fait en outre décroître la pression entre la zone 0 et la zone I en vue de la séparation d'un mélange en trois composants ou trois coupes.

**11.** Procédé selon l'une des revendications 7 à 10 dans lequel on injecte un mélange de trois composants dans un dispositif comportant quatre zones (0, I, II, III) dans lequel on détend et on sépare la totalité de l'éluant et du raffinat en aval de la zone III en amont de laquelle a été introduite la charge ( A+B+C ): on recueille le raffinat et on recycle le courant de recyclage de l'éluant à la pression d'injection.

**12.** Procédé selon l'une des revendications 7 et 9 dans lequel on injecte un mélange de deux composants dans un dispositif comportant trois zones (I, II, III) dans lequel on détend et on sépare la totalité de l'éluant et du raffinat en aval de la zone III où a été injecté le mélange (AB), on recueille le raffinat et on recycle le courant de recyclage de l'éluant à la pression d'injection.

**13.** Procédé selon l'une des revendications 7,9 et 12 dans lequel on introduit une partie de l'extrait sensiblement débarrassé de l'éluant en aval d'une zone entre la zone I et la zone II, définie en amont par le point de soutirage de l'extrait (SB) et en aval par un point de réinjection (IRB) de ladite partie de l'extrait sensiblement débarrassé de l'éluant.

**14.** Procédé selon l'une des revendications 7,9 et 12 dans lequel on introduit une partie du raffinat sensiblement débarrassé de l'éluant en amont d'une zone Z disposée en aval de la zone III et définie en amont par un point (IRA) de réinjection de ladite partie du raffinat sensiblement débarrassé de l'éluant et en aval par le point de soutirage du raffinat (SA).

**15.** Procédé selon l'une des revendications 7 à 14 dans lequel la pression dans la zone III est inférieure d'au moins 1 bar et de préférence de 3 à 100 bar à la pression dans la zone II.

**16.** Procédé selon l'une des revendications 7 à 15 dans lequel la pression décroît entre chaque zone à partir de la zone recevant l'éluant.

## Claims

**1.** An apparatus for fractionating a mixture of p components into p components or q cuts, q being less than or equal to p, the apparatus comprising an assembly of n chromatographic columns or column sections mounted in series in a closed loop, having at least r injection stream and having q removal streams and at most n removal points per removal streams and at most n removal points per removal stream, the injection and removal points of different streams being advantageously identical, the injection and removal streams being alternated along the series of columns or sections, r, n, p and q being whole numbers defined as follows:

p :     represents the number of components present in the batch, $p \geq 2$ ;

q :     represents the number of distinct cuts or effluents issuing from the process, $q \geq 2$ ;

n :     represents the number of distinct columns or column sections used : $n \geq 3$ ;

r :     represents the number of distinct injection streams in the apparatus, and preferably $q \geq r \geq 2$ ;

the closed loop being formed of m successive chromatographic zones, such as (I, II, III ; I, II, III, IV ; O, I, II, III, IV ; I, Z, II, III, IV; I, II, III, Z, IV), each of these zones being constituted by at least one column or section ($C_k$) ;

m :     represents the number of zones : $3 \leq m \leq q + r$ ,

at least one and at most two points ($IR_1$, $IR_2$) between two zones serving for injection of eluent (recycled, fresh or recycled plus additional fresh), at least one point between two zones (IA+B or IA+B+C ) serving for injection of the mixture to be fractionated, at least one raffinate removal point (SA) between each mixture injection point and the following eluent injection point situated downstream of the mixture injection point, with respect to the eluent circulation direction, at least one extract removal point (SB, SC) between each eluent injection point and the mixture injection point situated downstream with respect to the eluent circulation direction, a removal point (SR) for a recycling stream connected to zone IV when said zone is present or connected to a separator S when said zone is not present, a control apparatus for periodically displacing the injection points ($ER_1$, $IR_2$, IA+B or IA+B+C ) and the removal points (SC, SB, SA, SR) of at least one section or column in the same direction (upstream or downstream), the apparatus comprises a compressor or pump whose takeoff is connected to the recycling stream removal point (SR) and if necessary to an addition point for fresh eluent and whose delivery is connected to at least one recycling

stream injection point ($IR_1$ or $IR_2$) upstream of the furthest upstream extract removal point (SC, SB), the compressor or pump being adapted to deliver to said recycling stream injection point either a compressed gas whose pressure is lower than the critical pressure of said gas and which has a compressibility coefficient substantially different to 1 , or a supercritical fluid, or a subcritical liquid: when the apparatus comprises three zones (I, II, III), four zones (I, II, III, IV) or five zones (I, Z, II, III, IV or I, II, III, Z, IV) being adapted to the separation of two components or two cuts, at least one means $U_k$ for reducing or releasing the pressure allows a pressure variation between a zone (or the column or the section) and the zone (or the column or the section) immediately downstream, and when the apparatus comprises four zones (0, I, II, III) or five zones (0, I, II, III and IV) being adapted to the separation of three components or three cuts, at least one means $U_k$ for reducing or releasing the pressure is located between two removal points other than the extract removal point SC existing between the zones O and I, said means $U_K$ for reducing the pressure being connected to said control apparatus for periodic displacement.

2. Apparatus according to the claim 1 comprising three successive zones I, II, III for separation of two components or two cuts, wherein zone III (upstream of which mixture A+B is injected) is immediately followed by a release and separation means for the eluent and raffinate, the release and separation means comprising the raffinate removal point and the removal point for eluent recycling (SR) which is connected to the compressor or pump, allowing zone IV to be removed.

3. Apparatus according to any one of claims 1 to 2 wherein a zone Z is interposed between zones I and II and is defined upstream by the extract removal point (SB) and downstream by a reinjection point (IRB) for a portion of the substantially eluent free extract.

4. Apparatus according to any one of claims 1 to 2 wherein a zone Z is inserted downstream of zone III and is defined upstream by a reinjection point (IRA) for a substantially eluent free raffinate portion and downstream by the raffinate removal point (SA).

5. Apparatus according to claim 1 wherein, comprising four zones (O, I, II, III) or five zones (O, I, II, III and IV), at least one additional pressure reduction or release means, connected to said control apparatus for periodic displacement, is situated between the zone O and the zone I.

6. Apparatus according to claim 1, comprising four successive zones O, I, II, III for separation of three components A, B, C or three cuts, wherein zone III (downstream of the injection point for the mixture A+B+C) is immediately followed by a release and raffinate (eluent and constituent A) separation means, said release and separation means comprising the raffinate removal point (SA) and the removal point for eluent recycling (SR) which is conneted to a compressor or the pump, thus allowing zone IV to be removed.

7. A process for fractionating a mixture of p components into p components or q cuts, q being less than or equal to p, using an apparatus comprising an assembly of n chromatographic columns or column sections mounted in series in a closed loop, having at least r injection streams and at most n injection points per injection stream and having q removal streams and at most n removal points per removal stream, the injection and removal points of different steams being advantageously identical, the injection and removal streams being alternated along the series of columns or sections, r, n, p and q being whole numbers defined as follows :

p : represents the number of components present in the batch, $p \geq 2$ ;
q : represents the number of distinct cuts or effluents issuing from the process, $q \geq 2$ ;
n : represents the number of distinct columns or column sections used : $n \geq 3$ ;
r : represents the number of distinct injection streams in the apparatus, and preferably $q \geq r \geq 2$ ;
the closed loop being formed of m successive chromatographic zones, such as as (I, II, III ; I, II, III, IV ; O, I, II, III, IV; I, Z, II, III, IV; I, II, III, Z, IV), each of these zones being constituted by at least one column or section (Ck) ;
m : represents the number of zones : $3 \leq m \leq q + r$ ,

at least one and at most two ponts ($IR_1$, $IR_2$) between two zones serving for injection of eluent (recycled, fresh or recycled plus additional fresh), at least one point between two zones (IA+B or IA+B+C ) serving for injection of the mixture to be fractionated, at least one raffinate removal point (SA) beztween each mixture injection point and the following eluent injection point situated downstream of the mixture injection point, with respect to the eluent circulation direction, at least one extract removal point (SB, SC) between each eluent injection point and the mixture injection point situated downstream, with respect to the eluent circulation direction, a removal point (SR) for a recycling stream connected to zone IV, wherein the injection points ($IR_1$, $IR_2$, IA+B or IA+B+C) and the removal points (SC, SB, SA, SR) of at least one section or column are periodically displaced in the same direction (upstream or dowstream), the process being implemented: . either with injection of a compressed gas as eluent wherein the pressure at any point in all zones is lower than the critical pressure of the gas and the gas having a compressibility coefficient substantially different to 1 over any point in at least one zone and preferably at any point in at least two zones from the eluent injection point;

.    or with injection of at least one supercritical fluid as eluent;
.    or with injection of at least one subcritical fluid as eluent;

the process being carried out so that, to separate a mixture of two components or two cuts, the pressure in one column (or zone) is maintained at a level which is higher than or equal to that in the column (or zone) immediately downstream except at each eluent injection point where the pressure increases to the injection pressure; and that to separate a mixture of three components or three cuts, the pressure is decreased by at least one interval between two removal points other than the extract removal point between zones O and I.

8.   Process according to claim 7 wherein the pressure is decreased by at least one interval between two removal points following injection upstream of eluent (IR1) to the recycling removal point (SR).

9.   Process according to any one of claims 7 and 8 wherein the eluent fluid is injected into the closed loop at temperature different other than the operating temperatures.

10.  Process according to any one of claims 7 to 9 wherein the pressure is also decreased between zone O and zone I, for separating a mixture of three components or three cuts.

11.  Process according to any one of 7 to 10 wherein a mixture of three components is injected into an apparatus having four zones (O, I, II, III), wherein all the eluent and raffinate is released and separated downstream of zone III upstream of which the batch (A+B+C) has been introduced ; the raffinate is collected and the eluent recycling stream is recycled at the injection pressure.

12.  Process according to any one of claims 7 and 9, wherein a mixture of two components is injected into an apparatus comprising three zones (I, II, III) wherein all the eluent and raffinate is released and separated downstream of zone III where mixture (AB) has been injected, the raffinate is collected and the eluent recycling stream is recycled at the injection pressure.

13.  Process according to any one of claims 7,9 and 12 wherein a portion of the substantially eluent free extract is introduced downstream of a zone Z between zone I and zone II, defined upstream by the extract removal point (SB) and downstream by a reinjection point (IRB) for said portion of the substantially eluent free extract.

14.  Process according to any one of claims 7, 9 and 12 wherein a portion of the substantially eluent free raffinate is introduced upstream of zone Z located downstream of zone III and defined upstream by a reinjection point (IRA) for said substantially eluent free raffinate portion and downstream by the raffinate removal point (SA).

15.  Process according to any one of claims 7 to 14, wherein the pressure in zone III is lower by at least one bar and preferably 3 to 100 bar than the pressure in zone II.

16.  Process according to any one of claims 7 to 15 wherein the pressure decreases between each zone from the zone receiving the eluent.

**Patentansprüche**

1.   Vorrichtung zur Fraktionierung eines Gemisches aus p Komponenten in p Komponenten oder q Schnitte, wobei q kleiner oder gleich p ist, die Vorrichtung eine Anordnung aus n chromatographischen Kolonnen oder chromatographischen Kolonnenabschnitten, die in Reihe und in geschlossener Schleife montiert sind, aufweist und wenigstens r Injektionsströme und höchstens n Injektionspunkte pro Injektionsstrom aufweist und q Abzugsströme und höchstens n Abzugpunkte pro Anzugsstrom besitzt, die Injektions- und Anzugspunkte der unterschiedlichen Ströme vorzugsweise zusammenfallen können, und wobei sich die Injektions- und Abzugsströme längs der Reihe von Kolonnen oder Kolonnenabschnitten abwechseln, wobei r, n, p und q wie folgt definierte ganze Zahlen sind:

p : stellt die Anzahl der in der Charge p ≥ 2 vorhandenen Komponenten dar;

q : stellt die Anzahl von Schnitten oder unterschiedlichen aus dem Verfahren stammenden Abströmen q ≥ 2 dar;

n : gibt die Zahl unterschiedlicher Kolonnen oder unterschiedlicher Kolonnenabschnitte, die eingesetzt werden, wieder: n ≥ 3;

r : gibt die Anzahl der unterschiedlichen Injektionsströme in der Vorrichtung und bevorzugt q ≥ r ≥ 2 wieder; wobei die Schleife gebildet ist aus m aufeinanderfolgenden chromatographischen Zonen derart, daß (I, II, III; I, II, III, IV; 0, I, II, III, IV; I, Z, II, III, IV; I, II, III, Z, IV), von denen jede dieser Zonen gebildet ist durch wenigstens eine Kolonne oder einen Kolonnenabschnitt ($C_k$);

m : gibt die Anzahl der Zonen: 3 ≤ m ≤ q + r wieder;

wobei wenigstens ein Punkt und höchstens zwei ($IR_1$, $IR_2$) zwischen zwei Zonen zur Injektion von Eluierungsmittel (sei es recycliert, sei es frisch, sei es recycliert und mit einem Zusatz an frischem) dienen, wenigstens ein Punkt zwischen zwei Zonen (IA+B oder IA+B+C ) zur Injektion des zu fraktionierenden Gemisches dient, wenigstens ein Punkt zum Anziehen des Raffinats (SA) zwischen jedem Injektionspunkt des Gemisches und dem folgenden Injektionspunkt des Eluierungsmittels, in Eluierungszirkulationsrichtung gesehen, hinter dem Injektionspunkt des Gemisches gelegen, wenigstens einem Abzugspunkt eines Extraktes (SB, SC) zwischen jedem Eluierungsmittelinjektionspunkt und dem Injektionspunkt des Gemisches, der in Zirkulationsrichtung des Eluierungsmittels dahinter gelegen ist, ein Anzugspunkt (SR) eines Recyclierungsstromes mit der Zone IV verbunden ist, wenn diese Zone IV vorhanden oder mit einem Separator S verbunden ist, wenn diese Zone nicht vorhanden ist, eine Steuereinrichtung, die es ermöglicht, über die Zeit in ein und der gleichen Richtung (anströmseitig oder abströmseitig) die Punkte der Injektion ($IR_1$, $IR_2$, IA+B oder IA+B+C ) und des Anzugs (SC, SB, SA, SR) um wenigstens eine Kolonne oder einen Kolonnenabschnitt zu verschieben, die Vorrichtung einen Kompressor oder eine Pumpe aufweist, deren Saugseite mit dem Anzugspunkt des Recyclierungsstroms (SR) und ggf. einem Punkt der Zuführung frischen Eluierungsmittels verbunden ist und dessen Druckseite mit wenigstens einem Injektionspunkt für den Recyclierungsstrom ($IR_1$ oder $IR_2$) vor dem Punkt des Anzugs des Extraktes (SC, SB), der am weitesten anströmseitig sich befindet, verbunden ist, der Kompressor oder die Pumpe so ausgelegt sind, daß sie diesem Injektionspunkt für Recyclierungsstrom entweder ein komprimiertes Gas liefern, dessen Druck kleiner als der kritische Druck dieses Gases ist und der einen Kompressibilitätskoeffizienten, der sich wesentlich von 1 unterscheidet, aufweist, oder ein superkritisches Fluid oder ein unterkritisches Fluid liefert; wenn die Vorrichtung drei Zonen (I, II, III), vier Zonen (I, II, III, IV) oder fünf Zonen (I, Z, II, III, IV oder I, II, III, Z, IV) umfaßt, die für die Trennung von zwei Komponenten oder zwei Schnitten ausgelegt sind, sorgt wenigstens ein Organ $U_k$ für die Reduktion des Druckes oder für die Entspannung für eine Veränderung des Druckes zwischen einer Zone (oder der Kolonne oder dem Abschnitt) und der Zone (oder der Kolonne oder des Abschnitts), die unmittelbar strömungsabwärts liegt und, wenn die Vorrichtung vier Zonen 0, I, II, III oder fünf Zonen (0, I, II, III und IV) umfaßt, die zur Trennung von drei Komponenten oder drei Schnitten ausgebildet sind, ist wenigstens ein Organ $U_k$ zur Reduktion des Druckes oder zur Entspannung zwischen zwei Abzugspunkten außer dem Abzugspunkt des Extraktes angeordnet, wobei SC zwischen den Zonen 0 und I existiert, und das Organ $U_k$ zur Druckreduktion mit dieser Steuervorrichtung für die zeitliche Verschiebung verbunden ist.

2. Vorrichtung nach Anspruch 1, drei aufeinanderfolgende Zonen I, II, III umfassend, die für die Trennung von zwei Komponenten oder zwei Schnitten ausgelegt sind, wobei der Zone III (vor der das Gemisch A+B eingeführt wird), unmittelbar ein Entspannungs und Trennorgan für das Eluierungsmittel und das Raffinat folgt, wobei das Entspannungs- und Trennorgan den Abzugspunkt für das Raffinat und den Abzugspunkt für die Recyclierung des Eluierungsmittels (SR) umfaßt, der mit dem Kompressor oder der Pumpe verbunden ist, was es ermöglicht, die Zone IV in Fortfall kommen zu lassen.

3. Vorrichtung nach einem der Ansprüche 1 bis 2, bei der man zwischen die Zonen I und II eine Zone Z zwischenschaltet, die vor dem Abzugspunkt des Extraktes (SB) und in Strömungsrichtung dahinter durch einen Reinjektionspunkt (IRB) eines Teils des vom Eluierungsmittel im wesentlichen befreiten Extraktes definiert ist.

4. Vorrichtung nach einem der Ansprüche 1 bis 2, bei der man hinter der Zone III eine Zone Z zwischenschaltet, die anströmseitig definiert ist durch einen Reinjektionspunkt (IRA) eines Teils des vom Eluierungsmittel im wesentlichen befreiten Raffinats und abströmseitig definiert ist durch den Abzugspunkt für das Raffinat (SA).

5. Vorrichtung nach Anspruch 1, bei der, wenn vier Zonen (0, I, II, III) oder fünf Zonen (0, I, II, III, IV) vorhanden sind, wenigstens ein Organ zur Reduktion des Druckes oder zur zusätzlichen Entspannung, verbunden mit der Zeitverschiebungssteuervorrichtung, sich zwischen der Zone 0 und der Zone 1 befindet.

6. Vorrichtung nach einem der Ansprüche 1 und 5, vier aufeinanderfolgende Zonen 0, I, II, III umfassend zur Trennung der drei Komponenten A, B, C oder drei Schnitte umfassend, bei der der Zone III (die abströmseitig zum Injektionspunkt des Gemisches A+B+C ) unmittelbar ein Entspannungs- und Trennorgan für das Raffinat (des Eluierungsmittels oder des Bestandteiles A) folgt, wobei das Entspannungs- und Trennorgan den Abzugspunkt für das Raffinat (SA) und den Abzugspunkt für die Recyclierung des Eluierungsmittels (SR) umfaßt, der mit dem Kompressor oder der Pumpe verbunden ist, wodurch es möglich wird, auf die Zone IV zu verzichten.

7. Verfahren zum Fraktionieren eines Gemisches aus p Komponenten in p Komponenten oder q Schnitte, wobei q kleiner oder gleich p ist, in einer Vorrichtung, die eine Anordnung von n chromatographischen Kolonnen oder chromatographischen Kolonnenabschnitten aufweist, die in Reihe und in geschlossener Schleife geschaltet sind und wenigstens r Injektionsströme und höchstens n Injektionspunkte pro Injektionsstrom aufweisen und über q Abzugsströme und höchstens n Abzugspunkte pro Abzugsstrom verfügen, wobei die Injektions- und Abzugspunkte der unterschiedlichen Ströme vorzugsweise zusammenfallen können, die Injektions- und Abzugsströme sich längs der Reihe von Kolonnen oder Abschnitten abwechseln, wobei r, n, p und q ganze Zahlen der folgenden Definition sind:

p : steht für die Anzahl von in der Charge vorhandenen Komponenten $p \geq 2$;

q : steht für die Anzahl von unterschiedlichen Schnitten oder Abströmen, die aus dem Verfahren stammen $q \geq 2$;

n : steht für die Anzahl unterschiedlicher Kolonnen oder unterschiedlicher Kolonnenabschnitte die eingesetzt werden: $n \geq 3$;

r : steht für die Anzahl von unterschiedlichen Injektionsströmen in der Vorrichtung und bevorzugt $q \geq r \geq 2$; wobei die Schleife gebildet wird aus m aufeinanderfolgenden chromatographischen Zonen, derart (I, II, III; I, II, III, IV; 0, I, II, III, IV; I, Z, II, III, IV; I, II, III, Z, IV), wobei jede dieser Zonen gebildet wird durch wenigstens eine Kolonne oder einen Abschnitt ($C_k$);

m : steht für die Anzahl von Zonen: $3 \leq m \leq q + r$;

wenigstens ein Punkt und höchstens zwei ($IR_1$, $IR_2$) zwischen zwei Zonen zur Injektion des Eluierungsmittels (sei es recycliert, sei es frisch, sei es recycliert und sei es frisch zugesetzt) dient, wenigstens ein Punkt zwischen zwei Zonen ($IA+B$ oder $IA+B+C$) zur Injektion des zu fraktionierenden Gemisches dient, wenigstens ein Punkt zum Abzug eines Raffinats (SA) zwischen jedem Injektionspunkt des Gemisches und dem folgenden Injektionspunkt des Eluierungsmittels, der strömungsabwärts in Zirkulationsrichtung des Eluierungsmittels vom Injektionspunkt des Gemisches aus gelegen ist, dient, wenigstens ein Punkt zum Abziehen eines Extraktes (SB, SC) zwischen jedem Injektionspunkt für das Eluierungsmittel und dem Injektionspunkt des in Abströmrichtung in Eluierungszirkulationsrichtung befindlichen Gemisches; ein Abzugspunkt eines Recyclierungsstromes, der mit der Zone IV verbunden ist, wenn diese Zone IV aufweist oder verbunden ist mit einem Separator S, wenn diese Zone nicht vorhanden ist, Verfahren, bei dem man über die Zeit in ein und der gleichen Richtung (strömungsabwärts oder strömungsaufwärts) die Injektionspunkte ($IR_1$, $IR_2$, $IA+B$ oder $IA+B+C$ ) und Abzugspunkte (SC, SB, SA, SR) wenigstens eines Abschnittes oder einer Kolonne verschiebt, wobei das Verfahren eingesetzt wird:

. entweder (1) mit Injektion als Eluierungsmittel eines komprimierten Gases, dessen Druck an jeder Stelle der Zonen kleiner als der kritische Druck des Gases ist, wobei das Gas einen Kompressibilitätskoeffizienten, im wesentlichen unterschiedlich zu 1 an jedem Punkt wenigstens einer Zone und bevorzugt an jedem Punkt von wenigstens zwei Zonen ausgehend vom Injektionspunkt des Eluierungsmittels aufweist;

. oder (2) mit Injektion als Eluierungsmittel wenigstens eines superkritischen Fluids;

. oder (3) mit Injektion als Eluierungsmittel wenigstens einer unterkritischen Flüssigkeit, wobei das Verfahren im übrigen derart durchgeführt wird, daß zur Trennung eines Gemisches in zwei Komponenten oder zwei Schnitte man den Druck in einer Kolonne (oder einer Zone) größer als den in der Kolonne (oder der Zone), die unmittelbar strömungsabwärts folgt, bis auf jeden Eluierungsmittelinjektionspunkt hält, wo der Druck bis zum Injektionsdruck steigt; und daß im Hinblick auf die Trennung eines Gemisches in drei Komponenten oder drei Schnitte man den Druck um wenigstens ein Intervall zwischen zwei Abzugspunkten außer dem Extraktabzugspunkt zwischen den Zonen 0 und I abnehmen läßt.

8. Vorrichtung nach Anspruch 7, bei dem man den Druck um wenigstens ein Intervall zwischen zwei Abzugspunkten von der anströmseitigen Injektion des Abströmmittels (IR1) bis zum Recyclierungsabzugspunkt (SR) abnehmen läßt.

9. Verfahren nach einem der Ansprüche 7 und 8, bei dem das Eluierungsfluid in die Schleife bei einer Temperatur unterschiedlich zur Arbeitstemperatur injiziert wird.

10. Verfahren nach einem der Ansprüche 7 bis 9, bei dem man im übrigen den Druck zwischen der Zone 0 und der Zone I im Hinblick auf die Trennung eines Gemisches in drei Komponenten oder drei Schnitte abnehmen läßt.

11. Verfahren nach einem der Ansprüche 7 bis 10, bei dem man ein Gemisch aus drei Komponenten in eine Vorrichtung injiziert, die über vier Zonen (0, I, II, III) verfügt, bei dem man die Gesamtheit des Eluierungsmittels und des Raffinats hinter der Zone III entspannt, vor der die Charge (A+B+C) eingeführt worden war; man das Raffinat sammelt und den Recyclierungsstrom des Eluierungsmittels bei Injektionsdruck recycliert.

12. Verfahren nach einem der Ansprüche 7 und 9, bei dem man ein Gemisch aus zwei Komponenten in eine Vorrichtung injiziert, die drei Zonen (I, II, III) umfaßt, bei dem man entspannt und trennt die Gesamtheit des Eluierungsmittels und des Raffinats abströmseitig zur Zone III, wo das Gemisch (AB) injiziert worden war, man das Raffinat sammelt und den Recyclierungsstrom des Eluierungsmittels bei Injektionsdruck recycliert.

13. Verfahren nach einem der Ansprüche 7, 9 und 12, bei dem man einen Teil des im wesentlichen vom Eluierungsmittel hinter einer Zone zwischen der Zone I und II befreiten Extraktes, definiert vor dem Abzugspunkt des Extraktes (SB) und in Abströmrichtung durch einen Reinjektionspunkt (IRB) für diesen Teil des vom Eluierungsmittel im wesentlichen befreiten Extraktes einführt.

14. Verfahren nach einem der Ansprüche 7, 9 und 12, bei dem man einen Teil des im wesentlichen vom Eluierungsmittel befreiten Raffinats vor einer Zone Z einführt, die hinter der Zone III angeordnet ist und anströmseitig durch einen Punkt (IRA) der Reinjektion dieses Teiles des Raffinats, der im wesentlichen vom Eluierungsmittel befreit wurde und abströmseitig durch einen Abzugspunkt des Raffinats (SA) definiert ist.

15. Verfahren nach einem der Ansprüche 7 bis 14, bei dem der Druck in der Zone III um wenigstens 1 bar und bevorzugt 3 bis 100 bar kleiner als der Druck in der Zone II ist.

16. Verfahren nach einem der Ansprüche 7 bis 15, bei dem der Druck zwischen jeder Zone ausgehend von der das Eluierungsmittel aufnehmenden Zone abnimmt.

FIG.1

FIG.2

FIG.3B

FIG.3A

FIG.4A

FIG.4B

FIG.5

28